(19) Europäisches Patentamt
European Patent Office
Office européen des brevets

(11) EP 1 995 037 B1

(12) **EUROPEAN PATENT SPECIFICATION**

(45) Date of publication and mention of the grant of the patent:
**06.07.2011 Bulletin 2011/27**

(21) Application number: **07737424.7**

(22) Date of filing: **27.02.2007**

(51) Int Cl.:
***B29C 47/20*** *(2006.01)* ***C08J 5/18*** *(2006.01)*
***C08L 23/04*** *(2006.01)* ***B29K 23/00*** *(2006.01)*
***B29L 7/00*** *(2006.01)* ***B29C 49/00*** *(2006.01)*

(86) International application number:
**PCT/JP2007/053622**

(87) International publication number:
**WO 2007/105483 (20.09.2007 Gazette 2007/38)**

(54) **PROCESS FOR PRODUCTION OF MOLDINGS BY THE INFLATION METHOD**

VERFAHREN ZUR HERSTELLUNG VON FORMTEILEN DURCH DAS AUFBLASVERFAHREN

PROCEDE DE PRODUCTION DE PIECES MOULEES PAR SOUFFLAGE

(84) Designated Contracting States:
**DE**

(30) Priority: **10.03.2006 JP 2006065529**
**17.03.2006 JP 2006075026**

(43) Date of publication of application:
**26.11.2008 Bulletin 2008/48**

(73) Proprietor: **Mitsui Chemicals, Inc.**
**Tokyo 105-7117 (JP)**

(72) Inventors:
- **UOSAKI, Hirotaka**
**Sodegaura-shi**
**Chiba 299-0265 (JP)**
- **KAWABE, Kuniaki**
**Sodegaura-shi**
**Chiba 299-0265 (JP)**
- **YASUI, Motoyasu**
**Sodegaura-shi**
**Chiba 299-0265 (JP)**
- **KUROKI, Hideki**
**Sodegaura-shi**
**Chiba 299-0265 (JP)**
- **NAKAMURA, Hideo**
**Koga City**
**Ibaraki 306-0213 (JP)**
- **AMADA, Yasushi**
**Tokyo 104-0031 (JP)**

(74) Representative: **HOFFMANN EITLE**
**Patent- und Rechtsanwälte**
**Arabellastraße 4**
**81925 München (DE)**

(56) References cited:
**JP-A- 2002 234 125** **JP-A- 2003 335 869**
**JP-A- 2003 528 948** **JP-A- 2004 059 867**
**JP-A- 2004 059 868** **US-A- 4 925 880**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 995 037 B1

## Description

### TECHNICAL FIELD

The present invention relates to a process for producing a molded product by inflation molding, and more particularly to a process for producing a molded product by inflation molding using, as raw materials, polyethylene of a specific density range and a specific polyethylene wax.

### BACKGROUND ART

Polyethylene has been subjected to inflation molding and used for various purposes as molded products, such as films and sheets, in the past. In recent years, enhancement of productivity in such inflation molding has been much more eagerly desired. As a general method to improve productivity in molding such as inflation molding, a method comprising adding a molding assistant and carrying out molding is known. For example, a method wherein a molding assistant such as an oil or a polyethylene wax is applied to a molding thermoplastic resin and molding is carried out has been studied (e.g., patent documents 1 and 2).

However, even if a resin such as polyethylene is subjected to inflation molding using a conventional molding assistant, properties of the resulting molded product, such as mechanical properties, are sometimes lowered though the moldability itself tends to be improved, and even if a molded product such as a film or a sheet is produced and tried, there sometimes occurs a problem depending upon the use purpose.

Patent document 1: Japanese Patent Publication No. 80492/1993

Patent document 2: National Publication of International Patent No. 528948/2003

### DISCLOSURE OF THE INVENTION

### PROBLEM TO BE SOLVED BY THE INVENTION

It is an object of the present invention to provide a process for producing a molded product of polyethylene, which is improved in productivity in inflation molding and produces a polyethylene molded product not impaired in properties inherent in polyethylene.

### MEANS TO SOLVE THE PROBLEM

The present inventors have studied the above object. As a result, they have found that when inflation molding is carried out by the use of polyethylene of a specific density range and a specific polyethylene wax as raw materials, not only productivity in inflation molding is improved but also a molded product that is not impaired in properties inherent in polyethylene itself, such as mechanical properties, is obtained, and they have accomplished the present invention.

That is to say, the process for producing a molded product of the present invention is characterized by inflation-molding a mixture comprising polyethylene having a density, as measured in accordance with a density gradient tube method of JIS K7112, of 900 to 980 (kg/$m^3$) and a polyethylene wax having a density, as measured in accordance with a density gradient tube method of JIS K7112, of 890 to 980 (kg/$m^3$) and a number-average molecular weight (Mn), as measured by gel permeation chromatography (GPC), of 500 to 4,000 in terms of polyethylene and satisfying a relationship represented by the following formula (I):

$$B \leq 0.0075 \times K \qquad (I)$$

wherein B is a content (% by weight) of a component having a molecular weight, as measured by gel permeation chromatography, of not less than 20,000 in terms of polyethylene, in the polyethylene wax, and K is a melt viscosity (mPa·s) of the polyethylene wax at 140°C.

The polyethylene wax preferably further satisfies a relationship represented by the following formula (II):

$$A \leq 230 \times K^{(-0.537)} \qquad (II)$$

wherein A is a content (% by weight) of a component having a molecular weight, as measured by gel permeation

chromatography, of not more than 1,000 in terms of polyethylene, in the polyethylene wax, and K is a melt viscosity (mPa·s) of the polyethylene wax at 140°C.

When the polyethylene has a density, as measured in accordance with a density gradient tube method of JIS K7112, of not less than 900 (kg/$m^3$) and less than 940 (kg/$m^3$), the number-average molecular weight (Mn) of the polyethylene, as measured by GPC, is preferably not less than 10,000 in terms of polyethylene.

When the polyethylene has a density, as measured in accordance with a density gradient tube method of JIS K7112, of 940 to 980 (kg/$m^3$), MI of the polyethylene, as measured under the conditions of 190°C and a test load of 21.18 N in accordance with JIS K7210, is preferably in the range of 0.01 to 100 g/10 min, and the number-average molecular weight (Mn) of the polyethylene wax, as measured by GPC, is preferably in the range of 500 to 3,000 in terms of polyethylene.

In the mixture comprising the polyethylene and the polyethylene wax, the polyethylene wax is preferably contained in an amount of 0.01 to 10 parts by weight based on 100 parts by weight of the polyethylene.

## EFFECT OF THE INVENTION

According to the process for producing a molded product of the present invention, productivity in inflation molding of polyethylene is excellent. Further, the molded product of polyethylene obtained by inflation molding is not impaired in properties inherent in polyethylene itself, such as mechanical properties.

## BEST MODE FOR CARRYING OUT THE INVENTION

The present invention is described in detail hereinafter.

First, raw materials for use in the inflation molding of the invention are described.

### Polyethylene

In the present invention, polyethylene means a homopolymer of ethylene, a copolymer of ethylene and an α-olefin or a blend thereof which has a density, as measured in accordance with a density gradient tube method of JIS K7112, of 900 to 980 (kg/$m^3$), and the polyethylene typically has MI, as measured under the conditions of 190°C and a test load of 21.18 N in accordance with JIS K7210, of 0.01 to 100 g/10 min.

As the polyethylene, there can be mentioned a homopolymer of ethylene, a copolymer of ethylene and an α-olefin or a blend thereof (also referred to as "polyethylene (1)" hereinafter) which has a density of not less than 900 (kg/$m^3$) and less than 940 (kg/$m^3$) and a number-average molecular weight (Mn), as measured by gel permeation chromatography (GPC), of not less than 10,000 in terms of polyethylene.

There is no specific limitation on the polyethylene (1) so long as it is polyethylene having a density of not less than 900 (kg/$m^3$) and less than 940 (kg/$m^3$). However, the polyethylene (1) is specifically low-density polyethylene, medium-density polyethylene, linear low-density polyethylene, very low-density polyethylene or a blend thereof.

As the polyethylene, there can be mentioned a homopolymer of ethylene, a copolymer of ethylene and an α-olefin or a blend thereof (also referred to as "polyethylene (2)" hereinafter) which has a density of 940 to 980 (kg/$m^3$) and MI, as measured under the conditions of 190°C and a test load of 21.18 N in accordance with JIS K7210, of 0.01 to 100 g/10 min.

There is no specific limitation on the polyethylene (2) so long as it is polyethylene having a density of 940 to 980 (kg/$m^3$). However, the polyethylene (2) is specifically high-density polyethylene or a blend thereof.

In the present invention, the conditions for measuring number-average molecular weight (Mn), MI and density of polyethylene are as follows.

### Number-average molecular weight (Mn)

Number-average molecular weight was determined by GPC measurement. The measurement was carried out under the following conditions. The number-average molecular weight was determined by making out a calibration curve using commercially available monodisperse standard polystyrene and performing conversion based on the following conversion method.

Apparatus: gel permeation chromatograph Alliance GPC 2000 model (manufactured by Waters Corporation)
Solvent: o-dichlorobenzene
Column: TSKgel column (manufactured by Tosoh Corporation) × 4
Flow velocity: 1.0 ml/min
Sample: 0.15 mg/ml o-dichlorobenzene solution
Temperature: 140°C

Molecular weight conversion: PE conversion/general-purpose calibration method
In calculation for the general-purpose calibration, the following Mark-Houwink viscosity formula's factors were used.
Factor for polystyrene (PS): KPS=$1.38\times10^{-4}$, aPS=0.70
Factor for polyethylene (PE): KPE=$5.06\times10^{-4}$, aPE=0.70

MI

MI was measured under the conditions of 190°C and a test load of 21.18 N in accordance with JIS K7210.

Density

Density was measured in accordance with a density gradient tube method of JIS K7112.
Although the density of the polyethylene (1) is not less than 900 (kg/$m^3$) and less than 940 (kg/$m^3$), as previously described, it is preferably in the range of 900 to 930 (kg/$m^3$).
When the density of the polyethylene (1) is in the above range, the resulting molded product has a good balance between gloss, transparency, blocking tendency,.
The number-average molecular weight (Mn) of the polyethylene (1), as measured by GPC, is not less than 10,000, preferably 10,000 to 200,000, more preferably 10,000 to 100,000, in terms of polyethylene.
When the number-average molecular weight (Mn) of the polyethylene (1) is in the above range, a molded product having a good balance between molding processability and mechanical strength can be obtained.
The MI (JIS K7210, 190°C) of the polyethylene (1) is preferably jn the range of 0.1 to 5.0 g/10 min, more preferably in the range of 0.5 to 4.0 g/10 min. When the MI of the polyethylene (1) is in the above range, a molded product having a good balance between molding processability and mechanical strength can be obtained.
Although the density of the polyethylene (2) is in the range of 940 to 980 (kg/$m^3$), as previously described, it is preferably in the range of 950 to 980 (kg/$m^3$).
When the density of the polyethylene (2) is in the above range, the resulting molded product is excellent in rigidity and impact property.
The MI of the polyethylene (2) is preferably in the range of 0.1 to 5.0 g/10 min, more preferably in the range of 0.5 to 4.0 g/10 min. When the MI of the polyethylene (2) is in the above range, a molded product having a good balance between molding processability and mechanical strength can be obtained.
Although the shape of the polyethylene is not specifically restricted, the polyethylene is usually in the form of pellet-like or tablet-like granules.

Polyethylene wax

In the present invention, the polyethylene wax means a homopolymer of ethylene, a copolymer of ethylene and an $\alpha$ olefin or a blend thereof which has a number-average molecular weight (Mn), as measured by gel permeation chromatography (GPC), of 500 to 4,000 in terms of polyethylene.
The number-average molecular weight (Mn) of the polyethylene wax in terms of polyethylene is determined by gel permeation chromatography (GPC) measurement under the same measuring conditions as those for the polyethylene, that is, the following conditions.

Number-average molecular weight (Mn)

Number-average molecular weight was determined by GPC measurement. The measurement was carried out under the following conditions. The number-average molecular weight was determined by making out a calibration curve using commercially available monodisperse standard polystyrene and performing conversion based on the following conversion method.
Apparatus: gel permeation chromatograph Alliance GPC 2000 model (manufactured by Waters Corporation)
Solvent: o-dichlorobenzene
Column: TSKgel column (manufactured by Tosoh Corporation) $\times$ 4
Flow velocity: 1.0 ml/min
Sample: 0.15 mg/ml o-dichlorobenzene solution
Temperature: 140°C
Molecular weight conversion: PE conversion/general-purpose calibration method
In calculation for the general-purpose calibration, the following Mark-Houwink viscosity formula's factors were used.
Factor for polystyrene (PS): KPS=$1.38\times10^{-4}$, aPS=0.70
Factor for polyethylene (PE): KPE=$5.06\times10^{-4}$, aPE=0.70

By virtue of the aforesaid composition and molecular weight of the polyethylene wax, productivity in molding tends to be improved.

The density of the polyethylene wax for use in the invention is in the range of 890 to 980 (kg/$m^3$). The density of the polyethylene wax is a value measured by a density gradient tube method of JIS K7112. When the density of the polyethylene wax is in the above range, productivity in molding tends to be improved.

The polyethylene wax of the invention is characterized in that there is a specific relationship represented by the following formula (I) between the molecular weight and the melt viscosity.

$$B \leq 0.0075 \times K \qquad (I)$$

In the formula (1), B is a content en the weight basis (% by weight) of a component having a molecular weight, as measured by gel permeation chromatography, of not less than 20,000 in terms of polyethylene, in the polyethylene wax, and K is a melt viscosity (mPa·s) of the polyethylene wax at 140°C, as measured by a Brookfield (B type) viscometer.

When a polyethylene wax satisfying the conditions of the formula (I) is used, the resulting molded product tends to be not impaired in properties inherent in polyethylene.

Specifically, when the polyethylene (1) is used as the polyethylene, the resulting molded product is not impaired in optical properties inherent in the polyethylene (1), such as transparency and gloss, and tends to be not impaired in mechanical properties either.

When the polyethylene (2) is used as the polyethylene, the resulting molded product tends to be not impaired in mechanical properties inherent in the polyethylene (2).

When a polyethylene wax having a low melt viscosity is applied to the polyethylene to carry out inflation molding, viscosity of the whole mixture is usually lowered, and hence productivity in molding tends to be improved. However, even if productivity is improved as above, properties of the resulting molded product, such as mechanical properties and optical properties, are not necessarily sufficient in some cases.

As a result of studies by the present inventors, it has been found that for the properties of a molded product obtained by inflation molding, such as a sheet or a film, the proportion of the component having a molecular weight of not less than 20,000 in the polyethylene wax used is very important in the relationship to the melt viscosity of the polyethylene wax. Although its detailed mechanism is not clear, it is presumed that when the polyethylene wax and the polyethylene for the molded product are melt kneaded, the melt behavior of the component having a molecular weight of not less than 20,000 in the whole polyethylene wax is specific even in the whole wax, and unless the amount of the component having a molecular weight of not less than 20,000 is decreased to not more than a certain proportion from the viewpoint of melt viscosity of the whole polyethylene wax, the polyethylene wax cannot be favorably dispersed in the polyethylene, resulting in that the properties of the final molded product, such as mechanical properties and optical properties, are influenced.

The polyethylene wax having a B value of the above range can be prepared by the use of a metallocene catalyst. Of metallocene catalysts, preferable is a metallocene catalyst having an uncrosslinked ligand. Such a metallocene catalyst is, for example, the later-described metallocene catalyst represented by the formula (1).

The B value can be controlled also by a polymerization temperature. For example, in the case where the polyethylene wax is produced by the use of the later-described metallocene catalyst, the polymerization temperature is usually in the range of 100 to 200°C. From the viewpoint of production of a polyethylene wax having the aforesaid B value, however, the polymerization temperature is preferably in the range of 100 to 180°C, more preferably in the range of 100 to 170°C.

The polyethylene wax of the invention preferably further has a specific relationship represented by the following formula (II) between the molecular weight and the melt viscosity.

$$A \leq 230 \times K^{(-0.537)} \qquad (II)$$

In the formula (II), A is a content on the weight basis (% by weight) of a component having a molecular weight, as measured by gel permeation chromatography, of not more than 1,000 in terms of polyethylene, in the polyethylene wax, and K is a melt viscosity (mPa·s) of the polyethylene wax at 140°C.

When a polyethylene wax satisfying the conditions of the formula (II) is used, the resulting molded product tends to be not impaired in properties inherent in polyethylene, and besides, bleedout from the molded product surface tends to be reduced.

Specifically, when the polyethylene (1) is used as the polyethylene, the resulting molded product tends to be not impaired in optical properties, such as transparency and gloss, and mechanical properties inherent in the polyethylene (1), and besides, bleedout from the molded product surface tends to be reduced.

When the polyethylene (2) is used as the polyethylene, the resulting molded product tends to be not impaired in mechanical properties inherent in the polyethylene (2), and besides, bleedout from the molded product surface tends to be reduced.

When a polyethylene wax having a low melt viscosity is applied to the polyethylene to carry out inflation molding, viscosity of the whole mixture is lowered, and hence productivity in molding tends to be improved, as previously described. However, even if productivity is improved as above, the resulting molded product is sometimes impaired in properties inherent in polyethylene, e.g., optical properties, such as transparency and gloss, and mechanical properties, and besides, bleedout from the molded product surface sometimes becomes a problem.

As a result of studies by the present inventors, it has been found that for the properties of a molded product obtained by inflation molding, such as a sheet or a film, e.g., mechanical properties, optical properties and bleedout, the proportion of the component having a molecular weight of not more than 1,000 in the polyethylene wax used is very important in the relationship to the melt viscosity of the polyethylene wax. Although its detailed mechanism is not clear, it is presumed that when the polyethylene wax and the polyethylene for the molded product are melt kneaded, the component having a molecular weight of not more than 1,000 in the whole polyethylene wax is liable to be melted and its melt behavior is specific even in the whole wax, and unless the amount of the component having a molecular weight of not more than 1,000 is decreased to not more than a certain proportion from the viewpoint of melt viscosity of the whole polyethylene wax, the component bleeds out on the surface and occasionally causes deterioration, resulting in that the properties of the final molded product, such as mechanical properties, optical properties and bleedout, are influenced.

The polyethylene wax having an A value of the above range can be prepared by the use of a metallocene catalyst. Of metallocene catalysts, preferable is a metallocene catalyst having an uncrosslinked ligand. Such a metallocene catalyst is, for example, the later-described metallocene catalyst represented by the formula (1).

The A value can be controlled also by a polymerization temperature. For example, in the case where the polyethylene wax is produced by the use of the later-described metallocene catalyst, the polymerization temperature is usually in the range of 100 to 200°C. From the viewpoint of production of a polyethylene wax having the above B value, however, the polymerization temperature is preferably in the range of 100 to 180°C, more preferably in the range of 100 to 170°C.

The number-average molecular weight (Mn) of the polyethylene wax is in the range of 500 to 4,000. In the case where the polyethylene (1) is used as the polyethylene, however, the number-average molecular weight is preferably in the range of 600 to 3,800, particularly preferably in the range of 700 to 3,500. When the number-average molecular weight (Mn) of the polyethylene wax is in the above range, dispersibility of the polyethylene wax in the polyethylene (1) in the molding tends to become more excellent. Moreover, a tendency toward enhancement of extrusion rate and a tendency toward reduction of burden in the extrusion become more conspicuous, so that the productivity tends to be further enhanced. Furthermore, even if the resulting molded product is compared with a molded product obtained without adding the polyethylene wax, the resulting molded product tends to be impaired less in transparency and surface properties.

In the case where the polyethylene (2) is used as the polyethylene, the number-average molecular weight (Mn) of the polyethylene wax is preferably in the range of 500 to 3,000. By virtue of this molecular weight of the polyethylene wax, productivity in molding tends to be improved.

In the case where the polyethylene (2) is used as the polyethylene, the number-average molecular weight (Mn) of the polyethylene wax is more preferably in the range of 700 to 3,000, particularly preferably in the range of 800 to 3,000. When the number-average molecular weight (Mn) of the polyethylene wax is in the above range, dispersibility of the polyethylene wax in the polyethylene (2) in the molding tends to become more excellent. Moreover, a tendency toward enhancement of extrusion rate and a tendency toward reduction of burden in the extrusion become more conspicuous, so that the productivity tends to be further enhanced. Furthermore even if the resulting molded product is compared with a molded product obtained without adding the polyethylene wax, the resulting molded product tends to have more excellent mechanical properties and tends to be impaired less in surface properties.

The Mn of the polyethylene wax can be controlled by a polymerization temperature,. For example, in the case where the polyethylene wax is produced by the use of the later-described metallocene catalyst, the polymerization temperature is usually in the range of 100 to 200°C. From the viewpoint of production of a polyethylene wax having the above-mentioned preferred Mn, however, the polymerization temperature is preferably in the range of 100 to 180°C, more preferably in the range of 100 to 170°C.

The density (D ($kg/m^3$)) of the polyethylene wax is in the range of 890 to 980 ($kg/m^3$). In the case where the polyethylene (1) is used as the polyethylene, the density of the polyethylene wax is more preferably in the range of 895 to 960 ($kg/m^3$), particularly preferably in the range of 895 to 945 ($kg/m^3$). When the density (D) of the polyethylene wax

is in the above range, dispersibility of the polyethylene wax in the polyethylene (1) in the molding tends to become more excellent. Moreover, a tendency toward enhancement of extrusion rate and a tendency toward reduction of burden in the extrusion become more conspicuous, so that the productivity tends to be further enhanced. Furthermore, even if the resulting molded product is compared with a molded product obtained without adding the polyethylene wax, the resulting molded product is not impaired in optical properties, and besides, it tends to be impaired less in mechanical properties.

In the case where the polyethylene (2) is used as the polyethylene, the density of the polyethylene wax is preferably in the range of 895 to 970 ($kg/m^3$), more preferably in the range of 895 to 960 ($kg/m^3$), particularly preferably in the range of 900 to 950 ($kg/m^3$).

When the density (D) of the polyethylene wax is in the above range, dispersibility of the polyethylene wax in the polyethylene (2) in the molding tends to become more excellent. Moreover, a tendency toward enhancement of extrusion rate and a tendency toward reduction of burden in the extrusion become more conspicuous, so that the productivity tends to be further enhanced. Furthermore, even if the resulting molded product is compared with a molded product obtained without adding the polyethylene wax, the resulting molded product is impaired less in mechanical properties, and in some cases, it is superior in mechanical properties.

In the case where the polyethylene wax is a homopolymer of ethylene, the density of the polyethylene wax depends upon the number-average molecular weight (Mn) of the polyethylene wax. For example, by lowering the molecular weight of the polyethylene wax, the density of the resulting polymer can be controlled to be low. In the case where the polyethylene wax is a copolymer of ethylene and an α-olefin, the density of the polyethylene wax depends upon the number-average molecular weight (Mn), and in addition, it can be controlled by the amount of the α-olefin based on ethylene in the polymerization and the type thereof. For example, by increasing the amount of the α-olefin based on ethylene, the density of the resulting polymer can be made low.

From the viewpoint of the density of the polyethylene wax, an ethylene homopolymer, a copolymer of ethylene and an α-olefin of 3 to 20 carbon atoms, or a mixture thereof is preferable.

As the α-olefin used for producing the copolymer of ethylene and an α-olefin of 3 to 20 carbon atoms, preferable is an α-olefin of 3 to 10 carbon atoms, more preferable is propylene, 1-butene, 1-pentene, 1-hexene, 4-methyl-1-pentene or 1-octene, and particularly preferable is propylene, 1-butene, 1-hexene or 4-methyl-1-pentene.

The amount of the α-olefin used in the production of the copolymer of ethylene and an α-olefin is preferably in the range of 0 to 20% by mol based on all the monomers used.

The density of the polyethylene wax can be controlled also by a polymerization temperature. For example, in the case where the polyethylene wax is produced by the use of the later-described metallocene catalyst, the polymerization temperature is usually in the range of 100 to 200°C. From the viewpoint of production of a polyethylene wax having the aforesaid preferred density, however, the polymerization temperature is preferably in the range of 100 to 180°C, more preferably in the range of 100 to 170°C.

The polyethylene wax for use in the invention is a homopolymer of ethylene, a copolymer of ethylene and an α-olefin or a blend thereof, as previously described. Such a polyethylene wax is solid at ordinary temperature and becomes a low-viscosity liquid at 65 to 130°C.

As for the polyethylene wax, the crystallization temperature [Tc (°C)] as measured by a differential scanning calorimeter (DSC) and the density (D ($kg/m^3$)) as measured by a density gradient method satisfy a relationship of preferably the following formula (III):

$$0.501 \times D - 366 \geq Tc \qquad (III),$$

more preferably the following formula (IIIa):

$$0.501 \times D - 366.5 \geq Tc \qquad (IIIa),$$

still more preferably the following formula (IIIb):

$$0.501 \times D - 367 \geq Tc \qquad (IIIb).$$

When the crystallization temperature (Tc) of the polyethylene wax and the density (D) thereof satisfy the relationship of the above formula, dispersibility of the polyethylene wax in the polyethylene tends to become excellent.

The polyethylene wax satisfying the relationship of the above formula can be prepared by the use of a metallocene catalyst. Of metallocene catalysts, preferable is a metallocene catalyst having an uncrosslinked ligand. Such a metallocene catalyst is, for example, the later-described metallocene catalyst represented by the formula (1).

The polyethylene wax satisfying the relationship of the above formula can be prepared also by controlling a polymerization temperature. For example, in the case where the polyethylene wax is produced by the use of the later-described metallocene catalyst, the polymerization temperature is usually in the range of 100 to 200°C. From the viewpoint of production of a polyethylene wax having the aforesaid B value, however, the polymerization temperature is preferably in the range of 100 to 180°C, more preferably in the range of 100 to 170°C.

A preferred metallocene-based catalyst in the invention is, for example, an olefin polymerization catalyst comprising:

(A) a metallocene compound of a transition metal selected from the periodic table group 4, and
(B) at least one compound selected from:

(b-1) an organoaluminum oxy-compound,
(b-2) a compound which reacts with the crosslinked metallocene compound (A) to form an ion pair, and
(b-3) an organoaluminum compound.

The above components are described in detail hereinafter.

Metallocene compound

(A) Metallocene compound of transition metal selected from periodic table group 4

The metallocene compound for forming the metallocene-based catalyst is a metallocene compound of a transition metal selected from the periodic table group 4 and is, for example, a compound represented by the following formula (1):

$$M^1Lx \qquad (1)$$

wherein $M^1$ is a transition metal selected from the periodic table group 4, x is a valence of the transition metal $M^1$, and L is a ligand. Examples of the transition metals indicated by $M^1$ include zirconium, titanium and hafnium. L is a ligand coordinated to the transition metal $M^1$, and at least one ligand L of the ligands is a ligand having a cyclopentadienyl skeleton. This ligand having a cyclopentadienyl skeleton may have a substituent. Examples of the ligands L having a cyclopentadienyl skeleton include cyclopentadienyl group; alkyl or cycloalkyl-substituted cyclopentadienyl groups, such as methylcyclopentadienyl group, ethylcyclopentadienyl group, n- or i-propylcyclopentadienyl group, n-, i-, sec- or t-butylcyclopentadienyl group, dimethylcyclopentadienyl group, methylpropylcyclopentadienyl group, methylbutylcyclopentadienyl group and methylbenzylcyclopentadienyl group; indenyl group; 4,5,6,7-tetrahydroindenyl group; and fluorenyl group. Hydrogen in this ligand having a cyclopentadienyl skeleton may be replaced with a halogen atom, a trialkylsilyl group.

In the case where the metallocene compound has two or more ligands having a cyclopentadienyl skeleton as the ligands L, two of the ligands having a cyclopentadienyl skeleton may be bonded to each other through an alkylene group, such as ethylene or propylene, a substituted alkylne group, such as isopropylidene or diphenylmethylene, a silylene group, a substituted silylene group, such as dimethylsilylene, diphenylsilylene or methylphenylsilylene,.

The ligand L other than the ligand having a cyclopentadienyl skeleton (ligand L having no cyclopentadienyl skeleton) is, for example, a hydrocarbon group of 1 to 12 carbon atoms, an alkoxy group, an aryloxy group, a sulfonic acid-containing group ($-SO_3R^1$), a halogen atom or a hydrogen atom ($R^1$ is an alkyl group, an alkyl group substituted with a halogen atom, an aryl group, an aryl group substituted with a halogen atom, or an aryl group substituted with an alkyl group).

Example-1 of metallocene compound

When the valence of the transition metal is for example 4, the metallocene compound represented by the formula (1) is more specifically represented by the following formula (2):

$$R^2_kR^3_lR^4_mR^5_nM^1 \qquad (2)$$

wherein $M^1$ is a transition metal selected from the periodic table group 4, $R^2$ is a group (ligand) having a cyclopentadienyl

skeleton, $R^3$, $R^4$ and $R^5$ are each independently a group (ligand) which has or does not have a cyclopentadienyl skeleton, k is an integer of 1 or more, and k+l+m+n=4.

Examples of metallocene compounds having zirconium as $M^1$ and containing at least two ligands having a cyclopentadienyl skeleton are given below. That is to say, bis(cyclopentadienyl)zirconium monochloride monohydride, bis(cyclopentadienyl)zirconium dichloride, bis(1-methyl-3-butylcyclopentadienyl)zirconium-bis(trifluoromethanesulfonate), bis(1,3-dimethylcyclopentadienyl)zirconium dichloride can be mentioned.

Compounds wherein the 1,3-position substituted cyclopentadienyl group in the above compounds is replaced with a 1,2-position substituted cyclopentadienyl group are also employable.

As another example of the metallocene compound, a metallocene compound of bridge type wherein at least two of $R^2$, $R^3$, $R^4$ and $R^5$ in the above formula (2), e.g., $R^2$ and $R^3$, are groups (ligands) having a cyclopentadienyl skeleton, and these at least two groups are bonded through an alkylene group, a sustituted alkylene group, a silylene group, a substituted silylene group is also employable. In this case, $R^4$ and $R^5$ are each independently the same as the aforesaid ligand L other than the ligand having a cyclopentadienyl skeleton.

Examples of such metallocene compounds of bridge type include ethylenebis(indenyl)dimethylzirconium, ethylenebis(indenyl)zirconium dichloride, isopropylidene(cyclopentadienyl-fluorenyl)zirconium dichloride, diphenylsilylenebis(indenyl)zirconium dichloride and methylphenylsilylenebis(indenyl)zirconium dichloride.

Example-2 of metallocene compound

As an example of the metallocene compound, a metallocene compound represented by the following formula (3), which is described in Japanese Patent Laid-Open Publication No. 268307/1992, can be given.

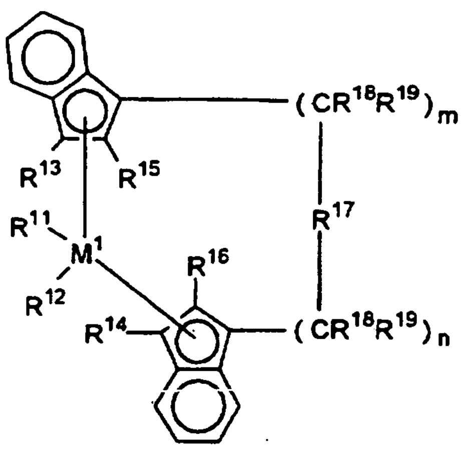

... (3)

In the above formula, $M^1$ is a transition metal of the periodic table group 4 and is specifically titanium, zirconium or hafnium.

$R^{11}$ and $R^{12}$ may be the same as or different from each other and is a hydrogen atom, an alkyl group of 1 to 10 carbon atoms, an alkoxy group of 1 to 10 carbon atoms, an aryl group of 6 to 10 carbon atoms, an aryloxy group of 6 to 10 carbon atoms, an alkenyl group of 2 to 10 carbon atoms, an arylalkyl group of 7 to 40 carbon atoms, an alkylaryl group of 7 to 40 carbon atoms, an arylalkenyl group of 8 to 40 carbon atoms or a halogen atom. $R^{11}$ and $R^{12}$ are each preferably a chorine atom.

$R^{13}$ and $R^{14}$ may be the same as or different from each other and is a hydrogen atom, a halogen atom, an alkyl group of 1 to 10 carbon atoms which may be halogenated, an aryl group of 6 to 10 carbon atoms, or a group of $-N(R^{20})_2$, $-SR^{20}$, $-OSi(R^{20})_3$, $-Si(R^{20})_3$ or $-P(R^{20})_2$ (wherein $R^{20}$ is a halogen atom, preferably a chlorine atom, an alkyl group of 1 to 10 carbon atoms, preferably 1 to 3 carbon atoms, or an aryl group of 6 to 10 carbon atoms, preferably 6 to 8 carbon atoms). $R^{13}$ and $R^{14}$ are each particularly preferably a hydrogen atom.

$R^{15}$ and $R^{16}$ are the same as $R^{13}$ and $R^{14}$ except that a hydrogen atom is not included, and they may be the same as or different from each other, preferably the same as each other. $R^{15}$ and $R^{16}$ are each preferably an alkyl group of 1 to 4 carbon atoms which may be halogenated, specifically methyl, ethyl, propyl, isopropyl, butyl, isobutyl, trifluoromethyl, particularly preferably methyl.

In the above formula (3), $R^{17}$ is selected from the following group.

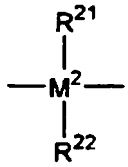 、 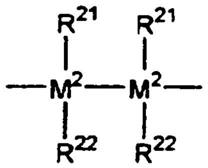 、 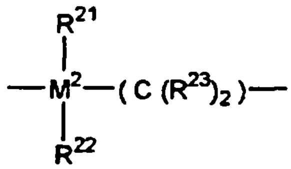 、

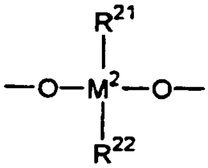 、 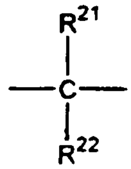 、 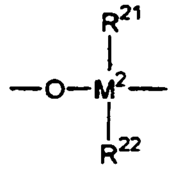 、

$=BR^{21}$, $=AlR^{21}$, -Ge-, -Sn-, -O-, -S-, =SO, $=SO_2$, $=NR^{21}$, =CO, $=PR^{21}$, $=P(O)R^{21}$ $M^2$ is silicon, germanium or tin, preferably silicon or germanium. $R^{21}$, $R^{22}$ and $R^{23}$ may be the same as or different from one another and are each a hydrogen atom, a halogen atom, an alkyl group of 1 to 10 carbon atoms, a fluoroalkyl group of 1 to 10 carbon atoms, an aryl group of 6 to 10 carbon atoms, a fluoroaryl group of 6 to 10 carbon atoms, an alkoxy group of 1 to 10 carbon atoms, an alkenyl group of 2 to 10 carbon atoms, an arylalkyl group of 7 to 40 carbon atoms, an arylalkenyl group of 8 to 40 carbon atoms or an alkylaryl group of 7 to 40 carbon atoms. "$R^{21}$ and $R^{22}$" or "$R^{21}$ and $R^{23}$" may form a ring together with atoms to which they are bonded. $R^{17}$ is preferably $=CR^{21}R^{22}$, $=SiR^{21}R^{22}$, $=GeR^{21}R^{22}$, -O-, -S-, =SO, $=PR^{21}$ or $=P(O)R^{21}$. $R^{18}$ and $R^{19}$ may be the same as or different from each other and are each the same atom or group as that of $R^{21}$. m and n may be the same as or different from each other and are each 0, 1 or 2, preferably 0 or 1, and m+n is 0, 1 or 2, preferably 0 or 1.

Examples of the metallocene compounds represented by the formula (3) include the following compounds. That is to say, rac-ethylene(2-methyl-1-indenyl)$_2$-zirconium dichloride, rac-dimethylsilylene(2-methyl-1-indecnyl)$_2$-zirconium dichloride can be mentioned. These metallocene compounds can be prepared by, for example, a method described in Japanese Patent Laid-Open Publication No. 268307/1992.

Example-3 of metallocene compound

As the metallocene compound, a metallocene compound represented by the following formula (4) is also employable.

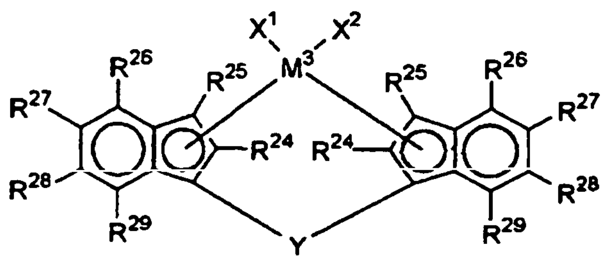 ... (4)

In the formula (4), $M^3$ is a transition metal atom of the periodic table group 4, specifically titanium, zirconium, hafnium. $R^{24}$ and $R^{25}$ may be the same as or different from each other and are each a hydrogen atom, a halogen atom, a hydrocarbon group of 1 to 20 carbon atoms, a halogenated hydrocarbon group of 1 to 20 carbon atoms, a silicon-containing group, an oxygen-containing group, a sulfur-containing group, a nitrogen-containing group or a phosphorus-containing group. $R^{24}$ is preferably a hydrocarbon group, particularly preferably an alkyl group of 1 to 3 carbon atoms, namely methyl, ethyl or propyl. $R^{25}$ is preferably a hydrogen atom or a hydrocarbon group, particularly preferably a hydrogen atom or an alkyl group of 1 to 3 carbon atoms, namely methyl, ethyl or propyl. $R^{26}$, $R^{27}$, $R^{28}$ and $R^{29}$ may be the same as or different from one another and are each a hydrogen atom, a halogen atom, a hydrocarbon group of 1 to

20 carbon atoms or a halogenated hydrocarbon group of 1 to 20 carbon atoms. Of these, a hydrogen atom, a hydrocarbon group or a halogenated hydrocarbon group is preferable. At least one set of $R^{26}$ and $R^{27}$, $R^{27}$ and $R^{28}$, and $R^{28}$ and $R^{29}$ may form a monocyclic aromatic ring together with carbon atoms to which they are bonded. In the case where there are two or more hydrocarbon groups or halogenated hydrocarbon groups in addition to the groups that form the aromatic ring, they may be bonded to each other to form a ring. In the case where $R^{29}$ is a substituent other than the aromatic group, it is preferably a hydrogen atom. $X^1$ and $X^2$ may be the same as or different from each other and are each a hydrogen atom, a halogen atom, a hydrocarbon group of 1 to 20 carbon atoms, a halogenated hydrocarbon group of 1 to 20 carbon atoms, an oxygen atom-containing group or a sulfur atom-containing group. Y is a divalent hydrocarbon group of 1 to 20 carbon atoms, a divalent halogenated hydrocarbon group of 1 to 20 carbon atoms, a divalent silicon-containing group, a divalent germanium-containing group, a divalent tin-containing group, -O-, -CO-, -S-, -SO-, $-SO_2-$, $-NR^{30}-$, - $P(R^{30})$ -, $-P(O)(R^{30})-$, $-BR^{30}-$ or $-AlR^{30}-$ (wherein $R^{30}$ is a hydrogen atom, a halogen atom, a hydrocarbon group of 1 to 20 carbon atoms or a halogenated hydrocarbon group of 1 to 20 carbon atoms).

Examples of the ligands which contain a monocyclic aromatic ring formed by bonding of at least one set of $R^{26}$ and $R^{27}$, $R^{27}$ and $R^{28}$, and $R^{28}$ and $R^{29}$ and are coordinated to $M^3$ include ligands represented by the following formulas.

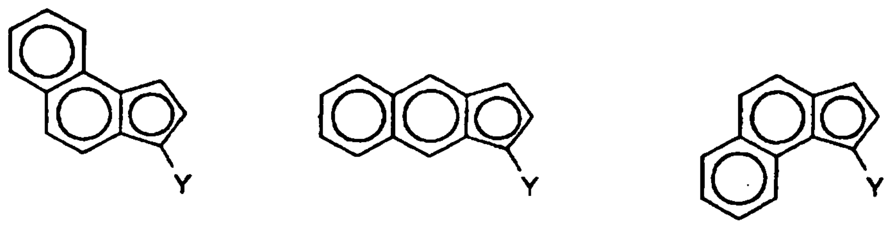

In the above formulas, Y is the same as that shown in the aforesaid formula.

Example-4 of metallocene compound

As the metallocene compound, a metallocene compound represented by the following formula (5) is also employable.

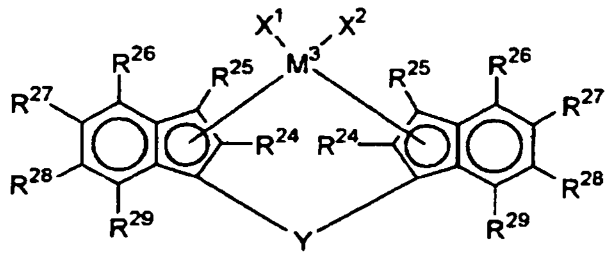

... (5)

In the formula (5), $M^3$, $R^{24}$, $R^{25}$, $R^{26}$, $R^{27}$, $R^{28}$ and $R^{29}$ are the same as those in the formula (4). Of $R^{26}$, $R^{27}$, $R^{28}$ and $R^{29}$, two groups including $R^{26}$ are each preferably an alkyl group, and $R^{26}$ and $R^{28}$, or $R^{28}$ and $R^{29}$ are each preferably an alkyl group. This alkyl group is preferably a secondary or tertiary alkyl group. Further, this alkyl group may be substituted with a halogen atom or a silicon-containing group, and examples of the halogen atoms and the silicon-containing groups include substituents described for $R^{24}$ and $R^{25}$. Of $R^{26}$, $R^{27}$, $R^{28}$ and $R^{29}$, the group other than the alkyl group is preferably a hydrogen atom. Two groups selected from $R^{26}$, $R^{27}$, $R^{28}$ and $R^{29}$ may be bonded to each other to form a monocyclic or polycyclic ring other than the aromatic ring. As the halogen atoms, the same atoms as described for $R^{24}$ and $R^{25}$ are available. As $X^1$, $X^2$ and Y, the same groups as described above are available.

Examples of the metallocene compounds represented by the formula (5) are given below. That is to say, rac-dimethylsilylene-bis(4,7-dimethyl-1-indenyl)zirconium dichloride, rac-dimethylsilylene-bis(2,4,7-trimethyl-1-indenyl)zirconium dichloride, rac-dimethylsilylene-bis(2,4,6-trimethyl-1-indenyl)zirconium dichloride can be mentioned.

Transition metal compounds wherein the zirconium metal in these compounds is replaced with a titanium metal or a hafnium metal are also employable. The transition metal compound is usually used as a racemic modification, but

the R configuration or the S configuration is also employable.

Example-5 of metallocene compound

As the metallocene compound, a metallocene compound represented by the following formula (6) is also employable.

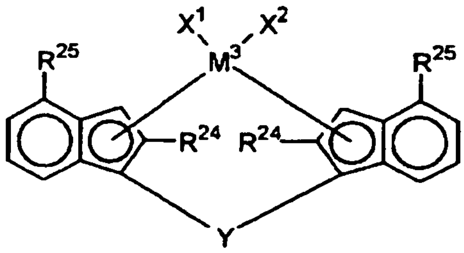

··· (6)

In the formula (6), $M^3$, $R^{24}$, $X^1$, $X^2$ and Y are the same as those in the formula (4). $R^{24}$ is preferably a hydrocarbon group, particularly preferably an alkyl group of 1 to 4 carbon atoms, namely methyl, ethyl, propyl or butyl. $R^{25}$ is an aryl group of 6 to 16 carbon atoms. $R^{25}$ is preferably phenyl or naphthyl. The aryl group may be substituted with a halogen atom, a hydrocarbon group of 1 to 20 carbon atoms or a halogenated hydrocarbon group of 1 to 20 carbon atoms. $X^1$ and $X^2$ are each preferably a halogen atom or a hydrocarbon group of 1 to 20 carbon atoms.

Examples of the metallocene compounds represented by the formula (6) are given below. That is to say, rac-dimethylsilylene-bis(4-phenyl-1-indenyl)zirconium dichloride, rac-dimethylsilylene-bis(2-methyl-4-phenyl-1-indenyl)zirconium dichloride, rac-dimethylsilylene-bis(2-methyl-4-(α-naphthyl)-1-indenyl)zirconium dichloride, rac-dimethylsilylene-bis(2-methyl-4-(β-naphthyl)-1-indenyl)zirconium dichloride, rac-dimethylsilylene-bis(2-methyl-4-(1-anthryl)-1-indenyl)zirconium dichloride can be mentioned. Transition metal compounds wherein the zirconium metal in these compounds is replaced with a titanium metal or a hafnium metal are also employable.

Example-6 of metallocene compound

As the metallocene compound, a metallocene compound represented by the following formula (7) is also employable.

$$LaM^9X^3_2 \qquad (7)$$

In the above formula, $M^4$ is a metal of the periodic table group 4 or lanthanide series. La is a derivative of a nonlocalized n-bond group and is a group imparting a restraint geometric shape to the metal $M^4$ active site. Each $X^3$ may be the same or different and is a hydrogen atom, a halogen atom, a hydrocarbon group of 20 or less carbon atoms, a silyl group containing 20 or less silicon atoms or a germyl group containing 20 or less germanium atoms.

Of such compounds, a compound represented by the following formula (8) is preferable.

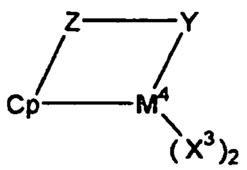

··· (8)

In the formula (8), $M^4$ is titanium, zirconium or hafnium. $X^3$ is the same as that described in the aforesaid formula (7). Cp is a substituted cyclopentadienyl group which is π-bonded to $M^4$ and has a substituent Z. Z is oxygen, sulfur, boron or an element of the periodic table group 4 (e.g., silicon, germanium or tin). Y is a ligand containing nitrogen, phosphorus, oxygen or sulfur, and Z and Y may together form a condensed ring. Examples of such metallocene compounds represented by the formula (8) are given below. That is to say, (dimethyl(t-butylamido)(tetramethyl-$\eta^5$-cyclopentadienyl)silane)titanium dichloride, ((t-butylamido)(tetramethyl-$\eta^5$-cyclopentadienyl)-1,2-ethanediyl)titanium dichloride can be mentioned. Compounds wherein titanium in these compounds is replaced with zirconium or hafnium are also employable.

Example-7 of metallocene compound

As the metallocene compound, a metallocene compound represented by the following formula (9) is also employable.

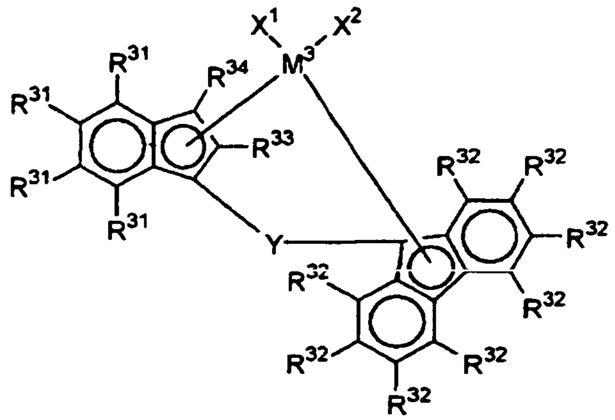

... (9)

In the formula (9), $M^3$ is a transition metal atom of the periodic table group 4, specifically titanium, zirconium or hafnium, preferably zirconium. Each $R^{31}$ may be the same or different, and at least one of them is an aryl group of 11 to 20 carbon atoms, an arylalkyl group of 12 to 40 carbon atoms, an arylalkenyl group of 13 to 40 carbon atoms, an alkylaryl group of 12 to 40 carbon atoms or a silicon-containing group, or at least two neighboring groups of the groups indicated by $R^{31}$ form a single or plural aromatic rings or aliphatic rings together with carbon atoms to which they are bonded. In this case, the total number of carbon atoms of the ring formed by $R^{31}$ including carbon atoms bonded to $R^{31}$ is 4 to 20. $R^{31}$ other than $R^{31}$ that forms the aryl group, the arylalkyl group, the arylalkenyl group, the alkylaryl group, the aromatic ring or the aliphatic ring is a hydrogen atom, a halogen atom, an alkyl group of 1 to 10 carbon atoms or a silicon-containing group. Each $R^{32}$ may be the same or different and is a hydrogen atom, a halogen atom, an alkyl group of 1 to 10 carbon atoms, an aryl group of 6 to 20 carbon atoms, an alkenyl group of 2 to 10 carbon atoms, an arylalkyl group of 7 to 40 carbon atoms, an arylalkenyl group of 8 to 40 carbon atoms, an alkylaryl group of 7 to 40 carbon atoms, a silicon-containing group, an oxygen-containing group, a sulfur-containing group, a nitrogen-containing group or a phosphorus-containing group. At least two neighboring groups of the groups indicated by $R^{32}$ may form a single or plural aromatic rings or aliphatic rings together with carbon atoms to which they are bonded. In this case, the total number of carbon atoms of the ring formed by $R^{32}$ including carbon atoms bonded to $R^{32}$ is 4 to 20. $R^{32}$ other than $R^{32}$ that forms the aromatic ring or the aliphatic ring is a hydrogen atom, a halogen atom, an alkyl group of 1 to 10 carbon atoms or a silicon-containing group. The group constituted of single or plural aromatic rings or aliphatic rings formed by the two groups indicated by $R^{32}$ includes an embodiment wherein the fluorenyl group has such a structure as represented by the following formula.

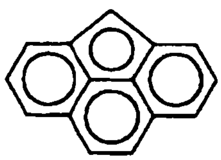

$R^{32}$ is preferably a hydrogen atom or an alkyl group, particularly preferably a hydrogen atom or a hydrocarbon

group of 1 to 3 carbon atoms, namely methyl, ethyl or propyl. A preferred example of the fluorenyl group having $R^{32}$ as such a substituent is a 2,7-dialkyl-fluorenyl group, and in this case, an alkyl group of the 2,7-dialkyl is an alkyl group of 1 to 5 carbon atoms. $R^{31}$ and $R^{32}$ may be the same as or different from each other. $R^{33}$ and $R^{34}$ may be the same as or different from each other and are each a hydrogen atom, a halogen atom, an alkyl group of 1 to 10 carbon atoms, an aryl group of 6 to 20 carbon atoms, an alkenyl group of 2 to 10 carbon atoms, an arylalkyl group of 7 to 40 carbon atoms, an arylalkenyl group of 8 to 40 carbon atoms, an alkylaryl group of 7 to 40 carbon atoms, a silicon-containing group, an oxygen-containing group, a sulfur-containing group, a nitrogen-containing group or a phosphorus-containing group, similarly to the above. At least one of $R^{33}$ and $R^{34}$ is preferably an alkyl group of 1 to 3 carbon atoms. $X^1$ and $X^2$ may be the same as or different from each other and are each a hydrogen atom, a halogen atom, a hydrocarbon group of 1 to 20 carbon atoms, a halogenated hydrocarbon group of 1 to 20 carbon atoms, an oxygen-containing group, a sulfur-containing group, a nitrogen-containing group or a residue of a conjugated diene formed from $X^1$ and $X^2$. The residue of a conjugated diene formed from $X^1$ and $X^2$ is preferably a residue of 1,3-butadiene, 2,4-hexadiene, 1-phenyl-1,3-pentadiene or 1,4-diphenylbutadiene. Such a residue may be further substituted with a hydrocarbon group of 1 to 10 carbon atoms. $X^1$ and $X^2$ are each preferably a halogen atom, a hydrocarbon group of 1 to 20 carbon atoms or a sulfur-containing group. Y is a divalent hydrocarbon group of 1 to 20 carbon atoms, a divalent halogenated hydrocarbon group of 1 to 20 carbon atoms, a divalent silicon-containing group, a divalent germanium-containing group, a divalent tin-containing group, -O-, -CO-, -S-, -SO-, $-SO_2-$, $-NR^{35}-$, $-P(R^{35})-$, $-P(O)(R^{35})-$, $-BR^{35}-$ or $-AlR^{35}-$ (wherein $R^{35}$ is a hydrogen atom, a halogen atom, a hydrocarbon group of 1 to 20 carbon atoms or a halogenated hydrocarbon group of 1 to 20 carbon atoms). Of these divalent groups, a group wherein the shortest linkage part of -Y- is constituted of one or two atoms is preferable. $R^{35}$ is a halogen atom, a hydrocarbon group of 1 to 20 carbon atoms or a halogenated hydrocarbon group of 1 to 20 carbon atoms. Y is preferably a divalent hydrocarbon group of 1 to 5 carbon atoms, a divalent silicon-containing group or a divalent germanium-containing group, more preferably a divalent silicon-containing group, particularly preferably alkylsilylene, alkylarylsilylene or arylsilylene.

Example-8 of metallocene compound

As the metallocene compound, a metallocene compound represented by the following formula (10) is also employable.

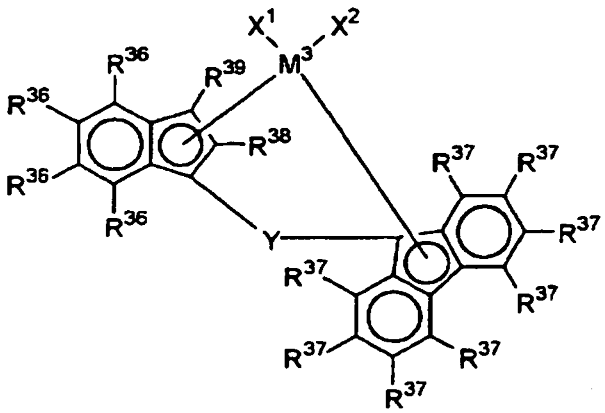

··· (10)

In the formula (10), $M^3$ is a transition metal atom of the periodic table group 4, specifically titanium, zirconium or hafnium, preferably zirconium. Each $R^{36}$ may be the same or different and is a hydrogen atom, a halogen atom, an alkyl group of 1 to 10 carbon atoms, an aryl group of 6 to 10 carbon atoms, an alkenyl group of 2 to 10 carbon atoms, a silicon-containing group, an oxygen-containing group, a sulfur-containing group, a nitrogen-containing group or a phosphorus-containing group. The alkyl group and the alkenyl group may be each substituted with a halogen atom. $R^{36}$ is preferably an alkyl group, an aryl group or a hydrogen atom, particularly preferably a hydrocarbon group of 1 to 3 carbon atoms, namely methyl, ethyl, n-propyl or i-propyl, an aryl group, such as phenyl, $\alpha$-naphthyl or $\beta$-naphthyl, or a hydrogen atom. Each $R^{37}$ may be the same or different and is a hydrogen atom, a halogen atom, an alkyl group of 1 to 10 carbon atoms, an aryl group of 6 to 20 carbon atoms, an alkenyl group of 2 to 10 carbon atoms, an arylalkyl group of 7 to 40 carbon atoms, an arylalkenyl group of 8 to 40 carbon atoms, an alkylaryl group of 7 to 40 carbon atoms, a silicon-containing group, an oxygen-containing group, a sulfur-containing group, a nitrogen-containing group or a phosphorus-containing group. The alkyl group, the aryl group, the alkenyl group, the arylalkyl group, the arylalkenyl group and the alkylaryl group may be each substituted with a halogen atom. $R^{37}$ is preferably a hydrogen atom or an alkyl group, particularly preferably a hydrogen atom or a hydrocarbon group of 1 to 4 carbon atoms, namely methyl, ethyl, n-propyl, i-propyl, n-butyl or tert-butyl. $R^{36}$ and $R^{37}$ may be the same as or different from each other. One of $R^{38}$ and $R^{39}$ is an alkyl group of 1 to 5 carbon atoms, and the other is a hydrogen atom, a halogen atom, an alkyl group of 1 to 10 carbon atoms, an alkenyl group of 2 to 10 carbon atoms, a silicon-containing group, an oxygen-containing group, a sulfur-containing group, a nitrogen-containing group or a phosphorus-containing group. It is preferable that one of $R^{38}$ and $R^{39}$ is an alkyl group of 1 to 3 carbon atoms, such as methyl, ethyl or propyl, and the other is a hydrogen atom. $X^1$ and $X^2$ may be the same as or different from each other and are each a hydrogen atom, a halogen atom, a hydrocarbon group of 1 to 20 carbon atoms, a halogenated hydrocarbon group of 1 to 20 carbon atoms, an oxygen-containing group, a sulfur-containing group, a nitrogen-containing group or a residue of a conjugated diene formed from $X^1$ and $X^2$. Of these, a halogen atom or a hydrocarbon group of 1 to 20 carbon atoms is preferable. Y is a divalent hydrocarbon group of 1 to 20 carbon atoms, a divalent halogenated hydrocarbon group of 1 to 20 carbon atoms, a divalent silicon-containing group, a divalent germanium-containing group, a divalent tin-containing group, -O-, -CO-, -S-, -SO-, $-SO_2-$, $-NR^{40}-$, - P $(R^{40})$-, -P(O)$(R^{40})$-, $-BR^{40}-$ or $-AlR^{40}-$ (wherein $R^{40}$ is a hydrogen atom, a halogen atom, a hydrocarbon group of 1 to 20 carbon atoms or a halogenated hydrocarbon group of 1 to 20 carbon atoms). Y is preferably a divalent hydrocarbon group of 1 to 5 carbon atoms, a divalent silicon-containing group or a divalent germanium-containing group, more preferably a divalent silicon-containing group, particularly preferably alkylsilylene, alkylarylsilylene or arylsilylene.

Example-9 of metallocene compound

As the metallocene compound, a metallocene compound represented by the following formula (11) is also employable.

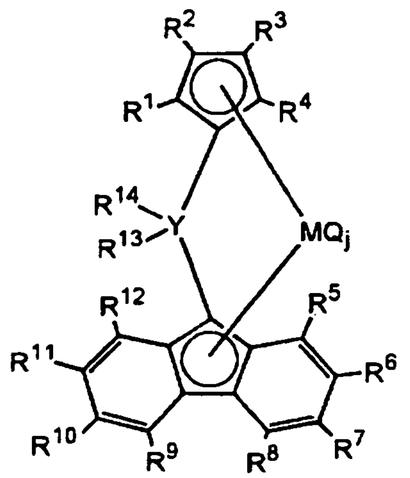

... (1 1)

In the formula (11), Y is selected from carbon, silicon, germanium and tin atoms, M is Ti, Zr or Hf, $R^1$, $R^2$, $R^3$, $R^4$, $R^5$, $R^6$, $R^7$, $R^8$, $R^9$, $R^{10}$, $R^{11}$ and $R^{12}$ are each selected from hydrogen, a hydrocarbon group and a silicon-containing group and may be the same as or different from one another, neighboring substituents from $R^5$ to $R^{12}$ may be bonded to each other to form a ring, $R^{13}$ and $R^{14}$ are each selected from a hydrocarbon group and a silicon-containing group and may be the same as or different from each other, and $R^{13}$ and $R^{14}$ may be bonded to each other to form a ring. Q may be selected from a halogen, a hydrocarbon group, an anionic ligand and a neutral ligand capable of coordination by a lone pair, in combination of the same or different kinds, and j is an integer of 1 to 4.
The cylopentadienyl group, the fluorenyl group and the crosslinked part, which are chemical structural features of the crosslinked metallocene compound relating to the invention, and other features are described below in order, and thereafter, a preferred crosslinked metallocene compound combining these features is described.

Cyclopentadienyl group

The cyclopentadienyl group may be substituted or unsubstituted. The cyclopentadienyl group which may be

substituted or unsubstituted means that $R^1$, $R^2$, $R^3$ and $R^4$ which the cyclopentadienyl part in the formula (11) possesses are all hydrogen atoms or that at least one of $R^1$, $R^2$, $R^3$ and $R^4$ is a cyclopentadienyl group substituted with a hydrocarbon group (f1), preferably a hydrocarbon group (f1') wherein the total number of carbon atoms is 1 to 20, or a silicon-containing group (f2), preferably a silicon-containing group (f2') wherein the total number of carbon atoms is 1 to 20. In the case where two or more of $R^1$, $R^2$, $R^3$ and $R^4$ are substituted,these substituents may be the same as or different from each other. The hydrocarbon group wherein the total number of carbon atoms is 1 to 20 is an alkyl, alkenyl, alkynyl or aryl group constituted of only carbon and hydrogen. Such a hydrocarbon group includes a group wherein arbitrary two adjacent hydrogen atoms are replaced at the same time to form an alicyclic or aromatic ring. In addition to the alkyl, alkenyl, alkynyl or aryl group constituted of only carbon and hydrogen, a hetero atom-containing hydrocarbon group wherein a part of hydrogen atoms directly bonded to carbon atoms of the above group are replaced with a halogen atom, an oxygen-containing group, a nitrogen-containing group or a silicon-containing group, or a hydrocarbon group wherein arbitrary two adjacent hydrogen atoms form an alicyclic ring is also available as the hydrocarbon group (f1') wherein the total number of carbon atoms is 1 to 20. Examples of such groups (f1') include straight-chain hydrocarbon groups, such as methyl group, ethyl group, n-propyl group, allyl group, n-butyl group, n-pentyl group, n-hexyl group, n-heptyl group, n-octyl group, n-nonyl group and n-decanyl group; branched hydrocarbon groups, such as isopropyl group, t-butyl group, amyl group, 3-methylpentyl group, 1,1-diethylpropyl group, 1,1-dimethylbutyl group, 1-methyl-1-propylbutyl group, 1,1-propylbutyl group, 1,1-dimethyl-2-methylpropyl group and 1-methyl-1-isopropyl-2-methylpropyl group; cyclic saturated hydrocarbon groups, such as cyclopentyl group, cyclohexyl group, cycloheptyl group, cyclooctyl group, norbornyl group and adamantyl group; cyclic unsaturated hydrocarbon groups, such as phenyl group, naphthyl group, biphenyl group, phenanthryl group and anthraceny group, and nucleus alkyl substituted groups thereof; saturated hydrocarbon groups substituted with aryl groups such as benzyl group and cumyl group; and hetero atom-containing hydrocarbon groups, such as methoxy group, ethoxy group, phenoxy group, N-methylamino group, trifluoromethyl group, tribromomethyl group, pentafluoroethyl group and pentafluorophenyl group. The silicon-containing group (f2) is, for example, a group wherein cyclic carbon of a cyclopentadienyl group is directly covalent-bonded to a silicon atom, and is specifically an alkylsilyl group or an arylsilyl group. Examples of the silicon-containing groups (f2') wherein the total number of carbon atoms is 1 to 20 include a trimethylsilyl group and a triphenylsilyl group.

Fluorenyl group

The fluorenyl group may be substituted or unsubstituted. The fluorenyl group which may be substituted or unsubstituted means that $R^5$, $R^6$, $R^7$, $R^8$, $R^9$, $R^{10}$, $R^{11}$ and $R^{12}$ which the fluorenyl group part in the formula (11) possesses are all hydrogen atoms or that at least one of $R^5$, $R^6$, $R^7$, $R^8$, $R^9$, $R^{10}$, $R^{11}$ and $R^{12}$ is a fluorenyl group substituted with a hydrocarbon group (f1), preferably a hydrocarbon group (f1') wherein the total number of carbon atoms is 1 to 20, or a silicon-containing group (f2), preferably a silicon-containing group (f2') wherein the total number of carbon atoms is 1 to 20. In the case where two or more of $R^5$, $R^6$, $R^7$, $R^8$, $R^9$, $R^{10}$, $R^{11}$ and $R^{12}$ are substituted, these substituents may be the same as or different from each other. Of $R^5$, $R^6$, $R^7$, $R^8$, $R^9$, $R^{10}$, $R^{11}$ and $R^{12}$, neighboring groups may be bonded to each other to form a ring. From the viewpoint of ease of production of the catalyst, a fluorenyl group wherein "$R^6$ and $R^{11}$" and "$R^7$ and $R^{10}$" are each the same as each other is preferably employed. A preferred group as the hydrocarbon group (f1) is the above-mentioned hydrocarbon group (f1') wherein the total number of carbon atoms is 1 to 20, and a preferred example of the silicon-containing group (f2) is the above-mentioned silicon-containing group (f2') wherein the total number of carbon atoms is 1 to 20.

Covalent bond crosslinkage

The main chain part of the bond to link the cyclopentadienyl group to the fluorenyl group is a divalent covalent bond crosslinkage containing one of carbon, silicon, germanium and tin atoms. The important point in the high-temperature solution polymerization of the invention is that the crosslinking atom Y of the covalent bond crosslinkage part has $R^{13}$ and $R^{14}$ which may be the same as or different from each other. A preferred group as the hydrocarbon group (f1) is the above-mentioned hydrocarbon group (f1') wherein the total number of carbon atoms is 1 to 20, and a preferred example of the silicon-containing group (f2) is the above-mentioned silicon-containing group (f2') wherein the total number of carbon atoms is 1 to 20.

Other features of crosslinked metallocene compound

In the formula (11), Q is selected from a halogen, a hydrocarbon group of 1 to 10 carbon atoms, a neutral, conjugated or non-conjugated diene of 10 or less carbon atoms, an anionic ligand and a neutral ligand capable of coordination by a lone pair, in combination of the same or different kinds. Examples of the halogens include fluorine, chlorine, bromine and iodine, and examples of the hydrocarbon groups include methyl, ethyl, n-propyl, isopropyl, 2-methylpropyl, 1,1-dimethylpropyl, 2,2-dimethylpropyl, 1,1-diethylpropyl, 1-ethyl-1-methylpropyl, 1,1,2,2-tetramethylpropyl, sec-butyl, tert-butyl, 1,1-dimethylbutyl, 1,1,3-trimethylbutyl, neopentyl, cyclohexylmethyl, cyclohexyl and 1-methyl-1-cyclohexyl. Examples of the neutral, conjugated or non-conjugated dienes of 10 or less carbon atoms include s-cis- or s-trans-$\eta^4$-1,3-butadiene, s-cis- or s-trans-$\eta^4$-1,4-diphenyl-1,3-butadiene, s-cis- or s-trans-$\eta^4$-3-methyl-1,3-pentadiene, s-cis- or s-trans-$\eta^4$-1,4-dibenzyl-1,3-butadiene, s-cis- or s-trans-$\eta^4$-2,4-hexadiene, s-cis- or s-trans-$\eta^4$-1,3-pentadiene, s-cis- or s-trans-$\eta^4$-1,4-ditolyl-1,3-butadiene, and s-cis- or s-trans-$\eta^4$-1,4-bis(trimethylsilyl)-1,3-butadiene. Examples of the anionic ligands include alkoxy groups, such as methoxy, tert-butoxy and phenoxy, carboxylate groups, such acetate and benzoate, and sulfonate groups, such as mesylate and tosylate. Examples of the neutral ligands capable of coordination by a lone pair include organophosphorus compounds, such as trimethylphosphine, triethylphosphine, triphenylphosphine and diphenylmethylphosphine; and ethers, such as tetrahydrofuran, diethyl ether, dioxane and 1,2-dimethoxyethane. j is an integer of 1 to 4, and when j is 2 or more, each Q may be the same or different.

Example-10 of metallocene compound

As the metallocene compound, a metallocene compound represented by the following formula (12) is also employable.

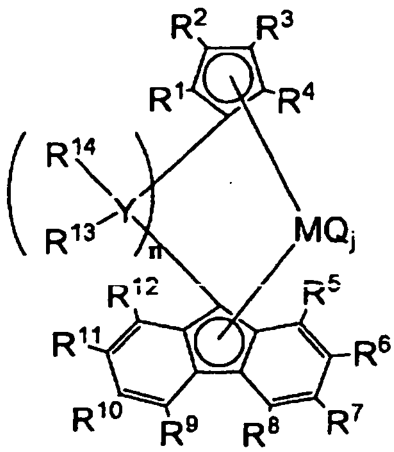

... (1 2)

In the above formula, $R^1$, $R^2$, $R^3$, $R^4$, $R^5$, $R^6$, $R^7$, $R^8$, $R^9$, $R^{10}$, $R^{11}$, $R^{12}$, $R^{13}$ and $R^{14}$ are each selected from hydrogen, a hydrocarbon group and a silicon-containing group and may be the same as or different from one another; neighboring substituents from $R^1$ to $R^{14}$ may be bonded to each other to form a ring; M is Ti, Zr or Hf; Y is a group 14 atom; Q is selected from the group consisting of a halogen, a hydrocarbon group, a neutral, conjugated or non-conjugated diene of 10 or less carbon atoms, an anionic ligand and a neutral ligand capable of coordination by a lone pair, in combination of the same or different kinds; n is an integer of 2 to 4; and j is an integer of 1 to 4.

In the formula (12), the hydrocarbon group is preferably an alkyl group of 1 to 20 carbon atoms, an arylalkyl group of 7 to 20 carbon atoms, an aryl group of 6 to 20 carbon atoms or an alkylaryl group of 7 to 20 carbon atoms, and may contain one or more cyclic structures.

Examples thereof include methyl, ethyl, n-propyl, isopropyl, 2-methylpropyl, 1,1-dimethylpropyl, 2,2-dimethylpropyl, 1,1-diethylpropyl, 1-ethyl-1-methylpropyl, 1,1,2,2-tetramethylpropyl, sec-butyl, tert-butyl, 1,1-dimethylbutyl, 1,1,3-trimethylbutyl, neopentyl, cyclohexylmethyl, cyclohexyl, 1-methyl-1-cyclohexyl, 1-adamantyl, 2-adamantyl, 2-methyl-2-adamantyl, menthyl, norbornyl, benzyl, 2-phenylethyl, 1-tetrahydronaphthyl, 1-methyl-1-tetrahydronaphthyl, phenyl, naphthyl and tolyl.

In the formula (12), the silicon-containing hydrocarbon group is preferably an alkyl or arylsilyl group having 1 to 4 silicon atoms and 3 to 20 carbon atoms, and examples thereof include trimethylsilyl, tertbutyldimethylsilyl and triphenylsilyl.

In the present invention, $R^1$ to $R^{14}$ in the formula (12) are each selected from hydrogen, a hydrocarbon group and a silicon-containing hydrocarbon group and may be the same as or different from one another. Examples of preferred hydrocarbon groups and silicon-containing hydrocarbon groups include the same groups as previously described.

Neighboring substituents from $R^1$ to $R^{14}$ on the cyclopentadienyl ring in the formula (12) may be bonded to each other to form a ring.

M in the formula (12) is an element of the periodic table group 4, namely zirconium, titanium or hafnium, preferably zirconium.

Y is a group 14 atom and is preferably a carbon atom or a silicon atom. n is an integer of 2 to 4, preferably 2 or 3, particularly preferably 2.

Q is selected from the group consisting of a halogen, a hydrocarbon group, a neutral, conjugated or non-conjugated diene of 10 or less carbon atoms, an anionic ligand and a neutral ligand capable of coordination by a lone pair, in combination of the same or different kinds. When Q is a hydrocarbon group, it is more preferably a hydrocarbon group of 1 to 10 carbon atoms.

Examples of the halogens include fluorine, chlorine, bromine and iodine, and examples of the hydrocarbon groups include methyl, ethyl, n-propyl, isopropyl, 2-methylpropyl, 1,1-dimethylpropyl, 2,2-dimethylpropyl, 1,1-diethylpropyl, 1-ethyl-1-methylpropyl, 1,1,2,2-tetramethylpropyl, sec-butyl, tert-butyl, 1,1-dimethylbutyl, 1,1,3-trimethylbutyl, neopentyl, cyclohexylmethyl, cyclohexyl and 1-methyl-1-cyclohexyl. Examples of the neutral, conjugated or non-conjugated dienes of 10 or less carbon atoms include s-cis- or s-trans-$\eta^4$-1,3-butadiene, s-cis- or s-trans-$\eta^4$-1,4-diphenyl-1,3-butadiene, s-cis- or s-trans-$\eta^4$-3-methyl-1,3-pentadiene, s-cis- or s-trans-$\eta^4$-1,4-dibenzyl-1,3-butadiene, s-cis- or s-trans-$\eta^4$-2,4-hexadiene, s-cis- or s-trans-$\eta^4$-1,3-pentadiene, s-cis- or s-trans-$\eta^4$-1,4-ditolyl-1,3-butadiene, and s-cis- or s-trans-$\eta^4$-1,4-bis(trimethylsilyl)-1,3-butadiene. Examples of the anionic ligands include alkoxy groups, such as methoxy, tert-butoxy and phenoxy, carboxylate groups, such acetate and benzoate, and sulfonate groups, such as mesylate and tosylate. Examples of the neutral ligands capable of coordination by a lone pair include organophosphorus compounds, such as trimethylphosphine, triethylphosphine, triphenylphosphine and diphenylmethylphosphine, and ethers, such as tetrahydrofuran, diethyl ether, dioxane and 1,2-dimethoxyethane. When j is an integer of 2 or more, plural Q may be the same as or different from each other.

In the formula (12), plural Y, namely 2 to 4 of Y, are present, and the plural Y may be the same as or different from one another. Plural $R^{13}$ and plural $R^{14}$ bonded to Y may be each the same as or different from one another. For example, plural $R^{13}$ bonded to the same Y may be different from one another, and plural $R^{13}$ bonded to different Y may be the same as one another. Further, plural $R^{13}$ or plural $R^{14}$ may form a ring.

A preferred example of the group 4 transition metal compound represented by the formula (12) is a compound represented by the following formula (13).

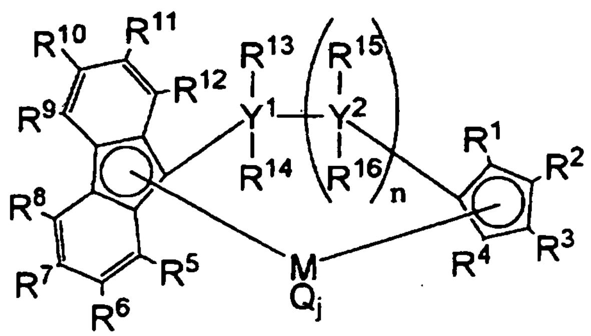

··· (1 3)

In the formula (13), $R^1$, $R^2$, $R^3$, $R^4$, $R^5$, $R^6$, $R^7$, $R^8$, $R^9$, $R^{10}$, $R^{11}$ and $R^{12}$ are each selected from a hydrogen atom, a hydrocarbon group and a silicon-containing group and may be the same as or different from one another; $R^{13}$, $R^{14}$, $R^{15}$ and $R^{16}$ are each a hydrogen atom or a hydrocarbon group; n is an integer of 1 to 3; in the case of n=1, $R^1$ to $R^{16}$ may be the same as or different from one another though they are not hydrogen atoms at the same time; neighboring substituents from $R^5$ to $R^{12}$ may be bonded to each other to form a ring; $R^{13}$ and $R^{15}$ may be bonded to each other to form a ring, and when $R^{13}$ and $R^{15}$ are bonded to each other to form a ring, $R^{14}$ and $R^{16}$ may be bonded to each other to form a ring at the same time; $Y^1$ and $Y^2$ are each a group 14 atom and may be the same as or different from each other; M is Ti, Zr or Hf; Q is selected from a halogen, a hydrocarbon group, an anionic ligand and a neutral ligand capable of coordination by a lone pair, in combination of the same or different kinds; and j is an integer of 1 to 4.

Compounds like Example-9 and Example 10 of the metallocene compounds are described in Japanese Patent Laid-Open Publication No. 175707/2004, WO2001/027124, WO2004/029062, WO2004/083265,.

The metallocene compounds described above can be used singly or in combination of two or more kinds. The metallocene compounds may be used after they are diluted with hydrocarbon, halogenated hydrocarbon.

The catalytic components consist of (A) the crosslinked metallocene compound described above and (B) at least one compound selected from (b-1) an organoaluminum oxy-compound, (b-2) a compound which reacts with the crosslinked

metallocene compound (A) to form an ion pair and (b-3) an organoaluminum compound.

The component (B) is described in detail hereinafter.

(b-1) Organialuminum oxy-compound

As the organoaluminum oxy-compound (b-1) for use in the invention, conventional aluminoxane publicly known can be used as it is. Specific examples thereof include compounds represented by the following formula (14):

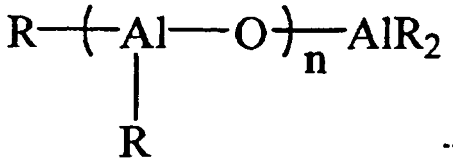

-------------- (14)

and/or the following formula (15):

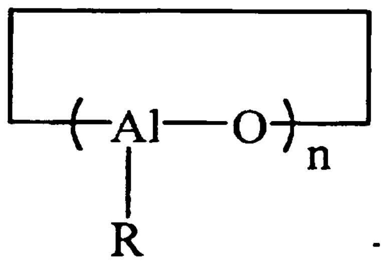

-------------- (15)

wherein R is a hydrocarbon group of 1 to 10 carbon atoms, and n is an integer of 2 or more. In particular, methylaluminoxane wherein R is a methyl group and n is 3 or more, preferably 10 or more, is utilized. In such aluminoxanes, some quantity of an organoaluminum compound may be included. A characteristic property of the high-temperature solution polymerization of the invention is that even such a benzene-insoluble organoaluminum oxy-compound as described in Japanese Patent Laid-Ooen Publication No. 78687/1990 is also applicable. Further, an organoaluminum oxy-compound described in Japanese Patent Laid-Open Publication No. 167305/1990 and aluminoxane having two or more kinds of alkyl groups which is described in Japanese Patent Laid-Open Publication No. 24701/1990 and Japanese Patent Laid-Open Publication No. 103407/1991 are also preferably employable. The "benzene-insoluble" oraganoaluminium oxy-compound used for the high-temperature solution polymerization of the invention means an organoaluminum oxy-compound containing an Al component that is soluble in benzene at 60°C in an amount of usually not more than 10%, preferably not more than 5%, particularly preferably not more than 2%, in terms of an Al atom and is insoluble or sparingly soluble in benzene.

As the organoaluminum oxy-compound for use in the invention, modified methylaluminoxane such as a compound of the following formula (16) is also available.

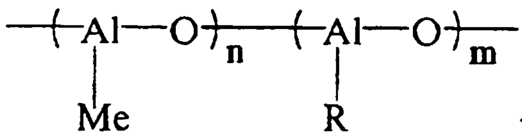

-------------- (16)

wherein R is a hydrocarbon group of 1 to 10 carbon atoms, and m and n are each an integer of 2 or more. This modified methaylaluminoxane is prepared by the use of trimethylaluminum and alkylaluminum other than trimethylaluminum. Such a compound [V] is generally called MMAO. Such MMAO can be prepared by the methods described in U.S. Patent No. 4,960,878 and U.S. Patent No. 5,041,584. Further, a compound having an isobutyl group as R, which is prepared by the use of trimethylaluminum and triisobutylaluminum, is commercially produced by Tosoh Finechem Corporation under the name of MMAO or TMAO. Such MMAO is aluminoxane having been improved in solubility in various solvents and storage stability, and is specifically a compound that is soluble in aliphatic hydrocarbon and alicyclic hydrocarbon, differently from the aforesaid compound that is insoluble or sparingly soluble in benzene, such as the compound of (14) or (15).

As the organoaluminum oxy-compound for use in the invention, an organoaluminum oxy-compound containing boron and represented by the following formula (17) is also available.

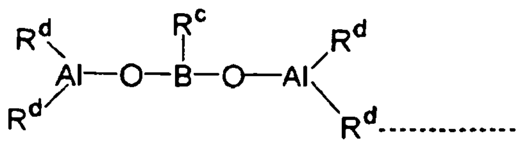 (1 7)

.

In the above formula, $R^c$ is a hydrocarbon group of 1 to 10 carbon atoms, and each $R^d$ may be the same or different and is a hydrogen atom, a halogen atom or a hydrocarbon group of 1 to 10 carbon atoms.

<u>(b-2) Compound which reacts with crosslinked metallocene compound (A) to form ion pair</u>

Examples of the compounds (b-2) which react with the crosslinked metallocene compound (A) to form an ion pair (sometimes called "ionic compounds" for short hereinafter) include Lewis acid, ionic compounds, borane compounds and carborane compounds, which are described in Japanese Patent Laid-Open Publication No. 501950/1989, Japanese Patent Laid-Open Publication No. 502036/1989, Japanese Patent Laid-Open Publication No. 179005/1991, Japanese Patent Laid-Open Publication No. 179006/1991, Japanese Patent Laid-Open Publication No. 207703/1991, Japanese Patent Laid-Open Publication No. 207704/1991, U.S. Patent No. 5,321,106. Further, heteropoly compounds and isopoly compounds can be also mentioned.

The ionic compound preferably adopted in the invention is a compound represented by the following formula (18).

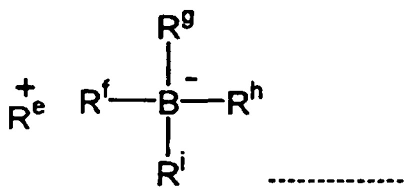 (1 8)

In the above formula, $R^{e+}$ is $H^+$, carbenium cation, oxonium cation, ammonium cation, phoshphonium cation, cycloheptyltrienyl cation, ferrocenium cation having a transition metal. $R^f$ to $f^i$ may be the same as or different from one another and are each an organic group, preferably an aryl group.

Examples of the carbenium cations include trisubstituted carbenium cations, such as triphenylcarbenium cation, tris(methylphenyl)carbenium cation and tris(dimethylphenyl)carbenium cation.

Examples of the ammonium cations include trialkylammonium cations, such as trimethylammonium cation, triethylammonium cation, tri(n-propyl)ammonium cation, trisopropylammonium cation, tri(n-butyl)ammonium cation and triisobutylammonium cation; N,N-dialkylanilinium cations, such as N,N-dimethylanilinium cation, N,N-diethylanilinium cation and N,N-2,4,6-pentamethylanilinium cation; and dialkylammonium cations, such as diisopropylammonium cation and dicyclohexylammonium cation.

Examples of the phosphonium cations include triarylphosphonium cations, such as triphenylphosphonium cation, tris(methylphenyl)phosphonium cation and tris(dimethylphenyl)phosphonium cation.

Of the above cations, carbenium cation, ammonium cation is preferable as $R^{e+}$, and triphenylcarbenium cation,

N,N-dimethylanilinum cation or N,N-diethylanilinium cation is particularly preferable.

Examples of carbenium salts include triphenylcarbenium tetraphenylborate, triphenylcarbenium tetrakis(pentafluorophenyl)borate, triphenylcarbenium tetrakis(3,5-ditrifluoromethylphenyl)borate, tris(4-methylphenyl)carbenium tetrakis(pentafluorophenyl)borate and tri(3,5-dimethylphenyl)carbenium tetrakis(pentafluorophenyl)borate.

Examples of ammonium salts include trialkyl-substituted ammonium salts, N,N-dialkylanilinium salts and dialkylammonium salts.

Examples of the trialkyl-substituted ammonium salts include triethylammonium tetraphenylborate, tripropylammonium tetraphenylborate, tri(n-butyl)ammonium tetraphenylborate, trimethylammonium tetrakis(p-tolyl)borate, trimethylammonium tetrakis(o-tolyl)borate, tri(n-butyl)ammonium tetrakis(pentafluorophenyl)borate, triethylammonium tetrakis (pentafluorophenyl)borate, tripropylammonium tetrakis(pentafluorophenyl)borate, tripropylammonium tetrakis(2,4-dimethylphenyl)borate, tri(n-butyl)ammonium tetrakis(3,5-dimethylphenyl)borate, tri(n-butyl)ammonium tetrakis(9-trilfuoromethylphenyl)borate, tri(n-butyl)ammonium tetrakis(3,5-ditrifluoromethylphenyl)borate, tri(n-butyl)ammonium tetrakis(o-tolyl)borate, dioctadecylmethylammonium tetraphenylborate, dioctadecylmethylammonium tetrakis(p-tolyl)borate, dioctadecylmethylammonium tetrakis(o-tolyl)borate, dioctadecylmethylammonium tetrakis(pentafluorophenyl)borate, dioctadecylmethylammonium tetrakis(2,4-dimethylphenyl)borate, dioctadecylmethylammonium tetrakis(3,5-dimethylphenyl)borate, dioctadecylmethylammonium tetrakis(4-trifluoromethylphenyl)borate, dioctadecylmethylammonium tetrakis(3,5-ditrifluoromethylphenyl)borate and dioctadecylmethylammonium.

Examples of the N,N-dialkylanilinium salts include N,N-dimethylanilinium tetraphenylborate, N,N-dimethylanilinium tetrakis(pentafluorophenyl)borate, N,N-dimethylanilinium tetrakis(3,5-ditrifluoromethylphenyl)borate, N,N-diethylanilinium tetraphenylborate, N,N-diethylanilinium tetrakis(pentafluorophenyl)borate, N,N-diethylanilinium tetrakis(3,5-ditrifluoromethylphenyl)borate, N,N-2,4,6-pentamethylanilinium tetraphenylborate and N,N-2,4,6-pentamethylanilinium tetrakis(pentafluorophenyl)borate.

Examples of the dialkylammonium salts include di(1-propyl)ammonium tetrakis(pentafluorophenyl)borate and dicyclohexylammonium tetraphenylborate.

In addition, ionic compounds disclosed by the present applicant (Japanese Patent Laid-Open Publication No. 51676/2004) are also employable without any restriction.

Such ionic compounds (b-2) as described above can be used as a mixture of two or more kinds.

<u>(b-3) Organoaluminum compound</u>

The organoaluminum compound (b-3) for forming the olefin polymerization catalyst is, for example, an organoaluminum compound represented by the following formula [X] or an alkylated complex compound of a group 1 metal and aluminum, which is represented by the following formula (19).

An organoaluminum compound represented by:

$$R^a{}_mAl(OR^b)_nH_pX_q \qquad (19)$$

wherein $R^a$ and $R^b$ may be the same as or different from each other and are each a hydrocarbon group of 1 to 15 carbon atoms, preferably 1 to 4 carbon atoms, X is a halogen atom, m is a number of $0<m\leq3$, n is a number of $0\leq n<3$, p is a number of $0\leq p<3$, q is a number of $0\leq q<3$, and $m+n+p+q=3$. Examples of such compounds include tri-n-alkylaluminums, such as trimethylaluminum, triethylaluminum, tri-n-butylaluminum, trihexylaluminum and trioctylaluminum; branched chain trialkylaluminums, such as triisopropylaluminum, triisobutylaluminum, tri-sec-butylaluminum, tri-tert-butylaluminum, tri-2-methylbutylaluminum, tri-3-methylhexylaluminum and tri-2-ethylhexylaluminum; tricycloalkylaluminums, such as tricyclohexylaluminum and tricyclooctylaluminum; triarylaluminums, such as triphenylaluminum and tritolylaluminum; dialkylaluminum hydrides, such as diisopropylaluminum hydride and isobutylaluminum hydride; alkenylaluminums represented by the formula $(i\text{-}C_4H_9)_xAl_y(C_5H_{10})_z$ (wherein x, y and z are each a positive number, and $z\leq2x$), such as isoprenylaluminum; alkylaluminum alkoxides, such as isobutylaluminum methoxide and isobutylaluminum ethoxide; dialkylaluminum alkoxides, such as dimethylaluminum methoxide, diethylaluminum ethoxide and dibutylaluminum butoxide; alkylaluminum sesquialkoxides, such as ethylaluminum sesquiethoxide and butylaluminum sesquibutoxide; partially alkoxylated alkylaluminums having an average composition represented by the formula $R^a{}_{2.5}Al(OR^b)_{0.5}$; alkylaluminum aryloxides, such as diethylaluminum phenoxide and diethylaluminum(2,6-di-t-butyl-4-methylphenoxide); dialkylaluminum halides, such as dimethylaluminum chloride, diethylaluminum chloride, dibutylaluminum chloride, diethylaluminum bromide and diisobutylaluminum chloride; alkylaluminum sesquihalides, such as ethylaluminum sesquichloride, butylaluminum sesquichloride and ethylaluminum sesquibromide; partially halogenated alkylaluminums, e.g., alkylaluminum dihalides, such as ethylaluminum dichloride; dialkylaluminum hydrides, such as diethylaluminum hydride and dibutylaluminum hydride; partially hydrogenated alkylaluminums, e.g., alkylaluminum dihydrides, such as ethylaluminum dihydride and propylaluminum dihydride; and partially alkoxylated and halogenated alkylaluminums, such as ethylaluminum ethoxychloride, butylaluminum butoxychloride and ethylaluminum ethoxybromide.

An alkylated complex compound of a metal of the periodic table group 1 and aluminum, which is represented by:

$$M^2AlR^a_4 \qquad (20)$$

wherein $M^2$ is Li, Na or K, and $R^a$ is a hydrocarbon group of 1 to 15 carbon atoms, preferably 1 to 4 carbon atoms. Examples of such compounds include $LiAl(C_2H_5)_4$ and $LiAl(C_7H_{15})_4$.

A compound analogous to the compound represented by the formula (20) is also employable, and for example, an organoaluminum compound wherein two or more aluminum compounds are bonded through a nitrogen atom can be mentioned. An example of such a compound is $(C_2H_5)_2AlN(C_2H_5)Al(C_2H_5)_2$.

From the viewpoint of ease of obtaining, trimethylaluminum or triisobutylaluminum is preferably used as the organoaluminum compound (b-3).

Polymerization

The polyethylene wax for use in the invention is obtained by homopolymerizing ethylene or copolymerizing ethylene and an α-olefin in the presence of the above-mentioned metallocene-based catalyst usually in a liquid phase. In the polymerization, the way of use of the components and the order of addition thereof are arbitrarily selected, and for example, the following methods are available.

[q1] A method of introducing the component (A) alone into a polymerizer.

[q2] A method of introducing the component (A) and the component (B) in an arbitrary order into a polymerizer.

In the method [q2], at least two of the catalytic components may be brought into contact with each other in advance. In this case, an α-olefin may be used as a solvent though a hydrocarbon solvent is generally used. The monomers used herein are as previously described.

As the polymerization method, suspension polymerization wherein polymerization is carried out in such a state that the polyethylene wax is present as granules in a solvent such as hexane, vapor phase polymerization wherein polymerization is carried out without using a solvent and solution polymerization wherein polymerization is carried out in such a state that the polyethylene wax is melted singly or in the presence of a solvent at a polymerization temperature of not lower than 140°C are possible, and of these, solution polymerization is preferable from the viewpoints of both the economical efficiency and the quality.

The polymerization reaction may be carried out by any of a batch process and a continuous process. When the polymerization is carried out by a batch process, the aforesaid catalytic components are used in the below-described concentrations.

When polymerization of an olefin is carried out using such an olefin polymerization catalyst as above, the component (A) is used in an amount of usually $10^{-9}$ to $10^{-1}$ mol, preferably $10^{-8}$ to $10^{-2}$ mol, based on 1 liter of the reaction volume.

The component (b-1) is used in such an amount that the molar ratio [(b-1)/M] of the component (b-1) to all the transition metal atoms (M) in the component (A) becomes usually 0.01 to 5,000, preferably 0.05 to 2,000. The component (b-2) is used in such an amount that the molar ratio [(b-2)/M] of the ionic compound in the component (b-2) to all the transition metals (M) in the component (A) becomes usually 0.01 to 5,000, preferably 1 to 2,000. The component (b-3) is used in such an amount that the molar ratio [(b-3)/M] of the component (b-3) to the transition metal atom (M) in the component (A) becomes usually 1 to 10,000, preferably 1 to 5,000.

The polymerization reaction is carried out under the conditions of a temperature of usually -20 to +200°C, preferably 50 to 180°C, more preferably 70 to 180°C, and a pressure of usually more than 0 and not more than 7.8 MPa (80 $kgf/cm^2$, gauge pressure), preferably more than 0 and not more than 4.9 MPa (50 $kgf/cm^2$, gauge pressure), while setting 10 g of the wax on a filter.

In the polymerization, ethylene and an α-olefin that is used when necessary are fed to the polymerization system in such a quantity ratio that a polyethylene wax of the aforesaid specific composition is obtained. In the polymerization, further, a molecular weight modifier such as hydrogen can be added.

By carrying out polymerization as above, the polymer formed is obtained usually as a polymer solution containing it, and therefore, the polymer solution is treated in a conventional manner, whereby a polyethylene wax is obtained.

In the present invention, it is preferable to particularly use a catalyst containing the metallocene compound shown in "Example-1 of metallocene compound".

By the use of such a catalyst, a polyethylene wax having the foresaid properties can be easily obtained.

Although the shape of the polyethylene wax of the invention is not specifically restricted, the polyethylene wax is usually in the form of pellet-like or tablet-like granules.

Other components

In the present invention, in addition to the polyethylene and the polyethylene wax, additives, e.g., stabilizers, such as antioxidant, ultraviolet light absorber and light stabilizer, metallic soaps, fillers and flame retardants, may be further used by adding them to the raw materials, when needed.
Examples of the stabilizers include:

antioxidants, such as hindered phenol-based compounds, phosphite-based compounds and thioether-based compounds;
ultraviolet light absorbers, such as benzotriazole-based compounds and benzophenone-based compounds; and
light stabilizers, such as hindered amine-based compounds.

Examples of the metallic soaps include stearates, such as magnesium stearate, calcium stearate, barium stearate and zinc stearate.
Examples of the fillers include calcium carbonate, titanium oxide, barium sulfate, talc, clay and carbon black.
Examples of the flame retardants include halogen compounds, such as halogenated diphenyl ethers, specifically decabromodiphenyl ether and octabromodiphenyl ether, and halogenated polycarbonates; inorganic compounds, such as antimony trioxide, antimony tetroxide, antimony pentoxide, sodium pyroantimonate and aluminum hydroxide; and phosphorus compounds.
As the flame retardant for prevention of drip, a compound such as tetrafluoroethylene can be added.
Examples of the antibacterial agents and the mildewproofing agents include organic compounds, such as imidazole-based compounds, thiazole-based compounds, nitrile-based compounds, haloalkyl-based compounds and pyridine-based compounds; and inorganic substances and inorganic compounds, such as silver, silver-based compounds, zinc-based compounds, copper-based compounds and titanium-based compounds.
Of these compounds, silver and the silver-based compounds that are thermally stable and have high performance are preferable.
Examples of the silver-based compounds include silver complexes and silver salts of aliphatic acids or phosphoric acids. In the case where silver or the silver-based compound is used as the antibacterial agent or the mildewproofing agent, such a substance is sometimes used by supporting it on a porous structure, such as zeolite, silica gel, zirconium phosphate, calcium phosphate, hydrotalcite, hydroxyapatite or calcium silicate.
Examples of other additives include colorant, plasticizer, anti-aging agent, colorant, plasticizer and oil.

Raw material compositional ratio

Although the compositional ratio between the polyethylene and the polyethylene wax that are used as the raw materials of the invention is not specifically restricted so long as the properties of the resulting molded product are not impaired, the amount of the polyethylene wax is in the range of usually 0.01 to 10 parts by weight, preferably 0.1 to 5 parts by weight, more preferably 0.3 to 2 parts by weight, based on 100 parts by weight of the polyethylene.
When the polyethylene and the polyethylene wax are used in a compositional ratio of the above range, the effect of improving fluidity in the inflation molding is high. Moreover, the molding rate is much more enhanced, and thereby the productivity tends to be enhanced. When the polyethylene (1) is used as the polyethylene, optical properties inherent in the polyethylene (1), such as transparency and gloss, are impaired less, and properties such that mechanical characteristics are not impaired tend to be excellent. When the polyethylene (2) is used as the polyethylene, mechanical properties inherent in the polyethylene tend to be impaired less. As compared with inflation molding without adding the polyethylene wax, molding at a lower molding temperature becomes feasible, and the cooling time is sometimes shortened. By lowering the molding temperature, thermal deterioration of the resin is inhibited, whereby lowering of resin strength is inhibited, and besides, burn spots or black spots of the resin can be sometimes inhibited.
Especially when the polyethylene wax is used in an amount of not more than 2 parts by weight based on 100 parts by weight of the polyethylene, mechanical properties inherent in the polyethylene are hardly impaired, and when the polyethylene (2) is used as the polyethylene, the resulting molded product sometimes has more excellent mechanical properties even in comparison with a molded product of a single substance of the polyethylene (2).

Inflation molding

In the process for producing a molded product of the invention, the above raw materials are subjected to inflation molding.
The method of inflation molding is not specifically restricted. In usual, the raw materials fed from a hopper, such as polyethylene and a polyethylene wax, are melt kneaded in an extruder, and the resulting melt kneadate is

extruded from a slit of an inflation molding die, such as a ring die, a circular die or a round die, then the extrudate is inflated with an air stream, and thereafter, it is flattened by guide plates arranged so as to be in the form of a principal rafter and then taken up by pinch rolls , whereby a tubular molded product (sheet, film) can be produced.

The method of feeding the polyethylene wax and the polyethylene to the extruder is not specifically restricted. For example, the polyethylene and the polyethylene wax may be separately fed to the extruder as they are, or a blend obtained by dry blending the polyethylene with the polyethylene wax may be fed to the extruder. Further, a master batch obtained by melt kneading the polyethylene and the polyethylene wax in advance may be fed to the extruder. Examples of devices used for dry blending include a high-speed mixer such as a Henschel mixer, and a tumbler. Examples of devices used for melt kneading include a plastomill, a kneader, a roll mixer, a Banbury mixer, a Brabender mixer, a single screw extruder and a twinscrew extruder.

Examples of the inflation molding methods include air-cooling inflation molding, air-cooling two-stage cooling inflation molding, high-speed inflation molding, water-cooling inflation molding and other publicly known methods.

In the present invention, the molded product obtained by the above inflation molding may be stretched. Examples of stretching methods include biaxial stretching, monoaxial stretching and other publicly known stretching methods.

In the present invention, a molded product in the form of a film is obtained by the above inflation molding. The film may be a single-layer film or a multilayer film.

The single-layer film is obtained by the above inflation molding. The multilayer film can be produced by, for example, melt kneading resin compositions for forming layers of a film by separate extruders, forcing the resulting melt kneadates into a co-extrusion die such as a co-extrusion multilayer circular die, extruding the melt kneadates from a slit of the die at the same time, inflating the extrudate with an air stream, then flattening it by guide plates arranged so as to be in the form of a principal rafter and taking it up by pinch rolls.

In the multilayer film obtained by the invention, at least one layer is formed from a resin composition obtained by the use of the polyethylene and the polyethylene wax as raw materials, but other layers may be formed from other thermoplastic resin compositions. To the conditions for extruding other thermoplastic resin compositions, extrusion molding conditions usually used for the thermoplastic resins are applicable.

In the extrusion of the melt kneadate from the die, the resin temperature is preferably in the range of 180 to 250°C. When the resin temperature in the extrusion from the die is in this range, a molded product having excellent gloss and excellent resin strength can be stably produced.

The blow ratio is preferably in the range of 1.5 to 6 times. When the blow ratio is in this range, a molded product having excellent gloss and excellent resin strength can be stably produced.

It is possible that the film (sheet) obtained by the above inflation molding is used as at least one layer and on this layer another layer may be laminated.

The above another layer may be formed from a thermoplastic resin composition, or may be formed from paper, a metal, an inorganic substance, a wood material.

Examples of the laminating methods include wet lamination, dry lamination, solvent-free dry lamination, extrusion lamination, co-extrusion lamination and other methods for laminating usual packaging materials. Prior to the laminating, each layer may be subjected to corona discharge treatment, ozone treatment, plasma treatment, flame treatment and other pretreatments, when necessary.

The above layers may be laminated through a layer formed from an anchor coating agent or an adhesive. Examples of the anchor coating agents include an isocyanate-based anchor coating agent, a polyethyleneimine-based anchor coating agent, a polybutadiene-based anchor coating agent and an organotitanium-based anchor coating agent. Examples of the adhesives include a urethane-based adhesive, an acrylic-based adhesive, a polyester-based adhesive, an epoxy-based adhesive, a polyvinyl acetate-based adhesive and a cellulose-based adhesive.

## EXAMPLES

The present invention is further described with reference to the following examples, but it should be construed that the invention is in no way limited to those examples.

In the following examples, properties of polyethylene and a polyethylene wax were measured in the following manner.

### Number-average molecular weight (Mn)

Number-average molecular weight (Mn) was determined by GPC measurement. The measurement was carried out under the following conditions. The number-average molecular weight was determined by making out a calibration curve using commercially available monodisperse standard polystyrene and performing conversion based on the following conversion method.

Apparatus: gel permeation chromatograph Alliance GPC 2000 model (manufactured by Waters Corporation)

Solvent: o-dichlorobenzene
Column: TSKgel column (manufactured by Tosoh Corporation) × 4
Flow velocity: 1.0 ml/min
Sample: 0.15 mg/ml o-dichlorobenzene solution
Temperature: 140°C
Molecular weight conversion: PE conversion/general-purpose calibration method
In the calculation for general-purpose calibration, the following Mark-Houwink viscosity formula's factors were used.
Factor for polystyrene (PS): KPS=$1.38\times10^{-4}$, aPS=0.70
Factor for polyethylene (PE): KPE=$5.06\times10^{-4}$, aPE=0.70

A value, B value

From the results of the above GPC measurement, the proportion of a component having a molecular weight of not more than 1,000 was determined in % by weight, and the resulting value was taken as an A value. Further, from the results of the GPC measurement, the proportion of a component having a molecular weight of not less than 20,000 was determined in % by weight, and the resulting value was taken as a B value.

Melt viscosity

Melt viscosity was measured by the use of a Brookfield viscometer.

Density

Density was measured in accordance with a density gradient method of JIS K7112.

Melting point

Melting point was measured by the use of a differential scanning calorimeter (DSC) (DSC-20, manufactured by Seiko Electron Industry Co., Ltd.). First, a test sample was temporarily heated up to 200°C, held for 5 minutes and immediately cooled down to room temperature. About 10 mg of this sample was subjected to DSC measurement in a temperature range of -20°C to 200°C under the conditions of a heating rate of 10°C/min. The value at the endothermic peak of a curve obtained from the measurement results was taken as a melting point.

Crystallization temperature

Crystallization temperature (Tc, °C) was measured under the conditions of a cooling rate of 2°C/min in accordance with ASTM D 3417-75.

Synthesis of polyethylene wax (1)

Using a metallocene catalyst, a polyethylene wax (1) was synthesized in the following manner.

In a stainless steel autoclave of an internal volume of 2 liters having been thoroughly purged with nitrogen and maintained at 25°C, 770 ml of hexane and 115 g of propylene were placed. Subsequently, the temperature of the system was raised to 150°C, and then 0.3 mmol of triisobutylaluminum, 0.04 mmol of dimethylanilinium tetrakis(pentafluorophenyl)borate and 0.0005 mmol of bis(cyclopentadienyl)zirconium dichloride were forced into the autoclave with ethylene to initiate polymerization. Thereafter, only ethylene was continuously fed to keep the total pressure at 3.0 MPa (gauge pressure), and the polymerization was carried out at 155°C for 30 minutes.

After a small amount of ethanol was added to the system to terminate the polymerization, unreacted ethylene was purged off. The resulting polymer solution was dried overnight at 100°C under reduced pressure to obtain 46 g of a polyethylene wax (1). The resulting polyethylene wax (1) had a number-average molecular weight (Mn) of 800, a weight-average molecular weight (Mw) of 1,500, a melt viscosity of 40 mPa·s, a density of 897 kg/$m^3$ and a melting point of 78.8°C. The A value was 23.5 % by weight, and the B value was 0.01 % by weight. The results are set forth in Table 1.

Synthesis of polyethylene wax (2)

Using a metallocene catalyst, a polyethylene wax (2) was synthesized in the following manner.

In a stainless steel autoclave of an internal value of 2 liters having been thoroughly purged with nitrogen and maintained at 25°C, 930 ml of hexane and 35 g of propylene were placed. Subsequently, the temperature of the system

was raised to 150°C, and then 0.3 mmol of triisobutylaluminum, 0.04 mmol of dimethylanilinium tetrakis(pentafluorophenyl)borate and 0.0005 mmol of bis(cyclopentadienyl)zirconium dichloride were forced into the autoclave with ethylene to initiate polymerization. Thereafter, only ethylene was continuously fed to keep the total pressure at 3.0 MPa (gauge pressure), and the polymerization was carried out at 155°C for 30 minutes.

After a small amount of ethanol was added to the system to terminate the polymerization, unreacted ethylene was purged off. The resulting polymer solution was dried overnight at 100°C under reduced pressure to obtain 40 g of a polyethylene wax (2). The resulting polyethylene wax (2) had a number-average molecular weight (Mn) of 1,300, a weight-average molecular weight (Mw) of 3,300, a melt viscosity of 90 mPa·s, a density of 948 kg/$m^3$ and a melting point of 115.4°C. The A value was 19.8 % by weight, and the B value was 0.3 % by weight. The results are set forth in Table 1.

Table 1 (Polyolefin wax property values)

| | Mn | Mw | Density (kg/m$^3$) | Melt viscosity K (mPa·s) | B value (wt%) | A value (wt%) | 0.0075×K | 230×K$^{-0.537}$ | DSC melting point (°C) | Crystallization temperature (°C) | Value of left-hand member of formula (III) |
|---|---|---|---|---|---|---|---|---|---|---|---|
| 30200BT | 2000 | 5000 | 913 | 300 | 2.2 | 9.3 | 2.3 | 10.8 | 98.2 | 86.6 | 91.41 |
| 48070BT | 3400 | 9000 | 902 | 1350 | 8.7 | 4.7 | 10.1 | 4.8 | 89.5 | 83.8 | 85.90 |
| 40800T | 2400 | 7000 | 980 | 600 | 4.2 | 7.3 | 4.5 | 7.4 | 127.7 | 116.2 | 124.98 |
| Polyethylene wax (1) | 800 | 1500 | 897 | 40 | 0.01 | 23.5 | 0.3 | 31.7 | 78.8 | 62.9 | 83.40 |
| Polyethylene wax (2) | 1300 | 3300 | 948 | 90 | 0.3 | 19.8 | 0.7 | 20.5 | 115.4 | 106.3 | 108.95 |
| 10500 | 700 | 1300 | 960 | 18 | 0 | 47.8 | 0.1 | 48.7 | 119.6 | 108.1 | 114.96 |
| 420P | 2000 | 6400 | 930 | 700 | 6.2 | 8.3 | 5.3 | 6.8 | 112.3 | 101.8 | 99.93 |
| A-C6 | 1800 | 6500 | 913 | 420 | 3.3 | 6.5 | 3.2 | 9.0 | 103.2 | 92.3 | 91.41 |

In the following examples, properties of a film were measured in the following manner.

Transparency

Haze of a film produced so as to have the same thickness was measured in accordance with JIS K7105.

Gloss

Gloss at a reflection angle of 60° was measured by the use of a gloss meter.

Productivity

Productivity was evaluated by a load voltage (torque) (A) in inflation molding.

Mechanical properties

From the resulting film, a No. 5 test specimen was prepared, and the test specimen was subjected to a tensile test at 23°C and a rate of 200 mm/min in accordance with JIS K7127 to measure a tensile yield stress.

Example of polyethylene (1)

Example 1A

100 Parts by mass of a linear low-density polyethylene resin (Evolue SP2510, available from Prime Polymer Co., Ltd., density: 923 kg/$m^3$, Mn: 21,000, MI: 1.5 g/10 min) and 2 parts by mass of a metallocene-based polyethylene wax (Excellex 30200BT, available from Mitsui Chemicals, Inc., density: 913 kg/$m^3$, Mn: 2,000, A value: 9.3% by weight, B value: 2.2% by weight, melt viscosity: 300 mPa·s) were mixed. Then, a cylinder temperature and a die temperature of a molding machine (EXV-50, manufactured by Placo Co. Ltd.) equipped with an inflation molding die (75 mm in diameter) were each set at 180°C, and the resulting mixture was fed to the molding machine and melt kneaded at a rotational speed of 65 rpm and a discharge rate of 40 kg/hr to prepare an inflation film. The resulting film had a thickness of 30 μm and a width of 280 mm. The load electric power (torque) in the melt kneading was 37 A, the discharge was stable, the resulting film was free from uneven thickness, and the productivity was excellent. The resulting molded product had a tensile breaking stress of 19.2 MPa, a haze of 4.7% and a gloss of 109%. The results are set forth in Table 2.

Example 2A

Inflation molding was carried out in the same manner as in Example 1A, except that the polyethylene wax was changed to a metallocene-based polyethylene wax (Excellex 48070BT, available from Mitsui Chemicals, Inc., density: 902 kg/$m^3$, Mn: 3,400, A value: 4.7% by weight, B value: 8.7% by weight, melt viscosity: 1,350 mPa·s). The results are set forth in Table 2.

Example 3A

Inflation molding was carried out in the same manner as in Example 1A, except that the polyethylene wax was changed to a metallocene-based polyethylene wax (Excellex 40800T, available from Mitsui Chemicals, Inc., density: 980 kg/$m^3$, Mn: 2,400, A value: 7.3% by weight, B value: 4.2% by weight, melt viscosity: 600 mPa·s). The results are set forth in Table 2.

Example 4A

Inflation molding was carried out in the same manner as in Example 1A, except that the polyethylene wax was changed to the polyethylene wax (1) (density: 897 kg/$m^3$, Mn: 800, A value: 23.5% by weight, B value: 0.01% by weight, melt viscosity: 40 mPa·s). The results are set forth in Table 2.

Example 5A

Inflation molding was carried out in the same manner as in Example 1A, except that the polyethylene wax was changed to the polyethylene wax (2) (density: 948 kg/$m^3$, Mn: 1,300, A value: 19.8% by weight, B value: 0.3% by weight,

melt viscosity: 90 mPa·s). The results are set forth in Table 2.

Example 6A

Inflation molding was carried out in the same manner as in Example 1A, except that the amount of the metallocene-based polyethylene wax (Excellex 30200BT, available from Mitsui Chemicals, Inc.) added was changed to 1 part by mass. The results are set forth in Table 2.

Example 7A

Inflation molding was carried out in the same manner as in Example 1A, except that the amount of the metallocene-based polyethylene wax (Excellex 30200BT, available from Mitsui Chemicals, Inc.) added was changed to 5 parts by mass. The results are set forth in Table 2.

Comparative Example 1A

A cylinder temperature and a die temperature of a molding machine (EXV-50, manufactured by Placo Co. Ltd.) equipped with an inflation molding die (75 mm in diameter) were each set at 180°C, and a linear low-density polyethylene resin (Evolue SP2510, available from Prime Polymer Co., Ltd.) was fed to the molding machine and melt kneaded at a rotational speed of 65 rpm and a discharge rate of 40 kg/hr to prepare an inflation film. The resulting film had a thickness of 30 μm and a width of 280 mm. The load electric power (torque) in the melt kneading was 42 A. The resulting molded product had a tensile breaking stress of 19.4 MPa, a haze of 4.6% and a gloss of 110%. The results are set forth in Table 2.

Comparative Example 2A

Inflation molding was carried out in the same manner as in Example 1A, except that the polyethylene wax was changed to a polyethylene wax (Hiwax 420P, available from Mitsui Chemicals, Inc., density: 930 kg/m$^3$, Mn: 2,000, A value: 8.3% by weight, B value: 6.2% by weight, melt viscosity: 700 mPa·s). When the resulting inflation film was compared with the inflation film of polyethylene alone in Comparative Example 1A, productivity in molding was improved, but the tensile breaking stress was markedly lowered, and the mechanical properties were impaired. The results are set forth in Table 2.

Comparative Example 3A

Inflation molding was carried out in the same manner as in Example 1A, except that the polyethylene wax was changed to a polyethylene wax (A-C6, available from Honeywell Co., density: 913 kg/m$^3$, Mn: 1,800, A value: 6.5% by weight, B value: 3.3% by weight, melt viscosity: 420 mPa·s). The results are set forth in Table 2. When the resulting inflation film was compared with the inflation film of polyethylene alone in Comparative Example 1A, productivity in molding was improved, but the haze was increased and the gloss was decreased. Thus, optical properties inherent in polyethylene were lowered, and also the mechanical properties tended to be lowered.

Table 2 (results of inflation molding)

| Example/Comparative Example No. | | Ex. 1A | Ex. 2A | Ex. 3A | Ex. 4A | Ex. 5A | Ex. 6A | Ex. 7A | Comp. Ex. 1A | Comp. Ex. 2A | Comp. Ex. 3A |
|---|---|---|---|---|---|---|---|---|---|---|---|
| Polyethylene | Type | SP2510 | SP2510 | SP2510 | SP2510 | SP2510 | SP2510 | SP2510 | SP2510 | SP2510 | SP2510 |
| | Amount | 100 | 100 | 100 | 100 | 100 | 100 | 100 | 100 | 100 | 100 |
| Polyethylene wax | Type | 30200BT | 48070BT | 40800T | polyethylene wax (1) | polyethylene wax (2) | 30200BT | 30200BT | | 420P | A-C6 |
| | Amount | 2 | 2 | 2 | 2 | 2 | 1 | 5 | | 2 | 2 |
| Torque | A | 37.0 | 36.5 | 37.5 | 35.5 | 35.7 | 40.0 | 30.0 | 42.0 | 36.5 | 39 |
| Tensile breaking stress | MPa | 19.2 | 19.4 | 18.5 | 19.3 | 18.9 | 19.6 | 18.4 | 19.4 | 16.7 | 18.9 |
| Haze | % | 4.7 | 4.2 | 4.8 | 4.7 | 4.6 | 4.8 | 4.6 | 4.6 | 4.3 | 8.6 |
| Gloss | % | 109 | 108 | 111 | 115 | 113 | 111 | 114 | 110 | 112 | 83 |

Example 8A

100 Parts by mass of a low-density polyethylene resin (Mirason F9673P, available from Prime Polymer Co., Ltd., density: 918 kg/$m^3$, Mn: 23,000, MI: 1.1 g/10 min) and 2 parts by mass of a metallocene-based polyethylene wax (Excellex 30200BT, available from Mitsui Chemicals, Inc., density: 913 kg/$m^3$, Mn: 2,000, A value: 9.3% by weight, B value: 2.2% by weight, melt viscosity: 300 mPa·s) were mixed. Then, a cylinder temperature and a die temperature of a molding machine equipped with an inflation molding die (90 mm in diameter) were set at 185°C and 190°C, respectively, and the resulting mixture was fed to the molding machine and melt kneaded at a rotational speed of 80 rpm and a discharge rate of 75 kg/hr to prepare an inflation film. The resulting film had a thickness of 45 μm and a width of 900 mm. The load electric power in the melt kneading was 115 A, the discharge was stable, the resulting film was free from uneven thickness, and the productivity was excellent. The resulting molded product had a tensile breaking stress of 24.2 MPa, a haze of 12.4% and a gloss of 70%. The results are set forth in Table 3.

Example 9A

Inflation molding was carried out in the same manner as in Example 8A, except that the polyethylene wax was changed to a metallocene-based polyethylene wax (Excellex 48070BT, available from Mitsui Chemicals, Inc., density: 902 kg/$m^3$, Mn: 3,400, A value: 4.7% by weight, B value: 8.7% by weight, melt viscosity: 1,350 mPa·s). The results are set forth in Table 3.

Example 10A

Inflation molding was carried out in the same manner as in Example 8A, except that the polyethylene wax was changed to a metallocene-based polyethylene wax (Excellex 40800T, available from Mitsui Chemicals, Inc., density: 980 kg/$m^3$, Mn: 2,400, A value: 7.3% by weight, B value: 4.2% by weight, melt viscosity: 600 mPa·s). The results are set forth in Table 3.

Example 11A

Inflation molding was carried out in the same manner as in Example 8A, except that the polyethylene wax was changed to the polyethylene wax (1) (density: 897 kg/$m^3$, Mn: 800, A value: 23.5% by weight, B value: 0.01% by weight, melt viscosity: 40 mPa·s). The results are set forth in Table 3.

Example 12A

Inflation molding was carried out in the same manner as in Example 8A, except that the polyethylene wax was changed to the polyethylene wax (2) (density: 948 kg/$m^3$, Mn: 1,300, A value: 19.8% by weight, B value: 0.3% by weight, melt viscosity: 90 mPa·s). The results are set forth in Table 3.

Example 13A

Inflation molding was carried out in the same manner as in Example 8A, except that the amount of the metallocene-based polyethylene wax (Excellex 30200BT, available from Mitsui Chemicals, Inc.) added was changed to 1 part by mass. The results are set forth in Table 3.

Example 14A

Inflation molding was carried out in the same manner as in Example 8A, except that the amount of the metallocene-based polyethylene wax (Excellex 30200BT, available from Mitsui Chemicals, Inc.) added was changed to 5 parts by mass. The results are set forth in Table 3.

Comparative Example 4A

A cylinder temperature and a die temperature of a molding machine equipped with an inflation molding die (90 mm in diameter) were set at 185°C and 190°C, respectively, and a low-density polyethylene resin (Mirason F9673P, available from Prime Polymer Co., Ltd.) was fed to the molding machine and melt kneaded at a rotational speed of 80 rpm and a discharge rate of 75 kg/hr to prepare an inflation film. The resulting film had a thickness of 45 μm and a width of 900 mm. The load electric power in the melt kneading was 130 A. The resulting molded product had a tensile breaking

stress of 24.7 MPa, a haze of 13.9% and a gloss of 66%. The results are set forth in Table 3.

Comparative Example 5A

Inflation molding was carried out in the same manner as in Example 8A, except that the polyethylene wax was changed to a polyethylene wax (Hiwax 420P, available from Mitsui Chemicals, Inc., density: 930 kg/$m^3$, Mn: 2,000, A value: 8.3% by weight, B value: 6.2% by weight, melt viscosity: 700 mPa·s). The results are set forth in Table 3. When the resulting inflation film was compared with the inflation film of polyethylene alone in Comparative Example 4A, productivity in molding was improved, but the tensile breaking stress was markedly lowered, and the mechanical properties were impaired.

Comparative Example 6A

Inflation molding was carried out in the same manner as in Example 8A, except that the polyethylene wax was changed to a polyethylene wax (A-C6, available from Honeywell Co., density: 913 kg/$m^3$, Mn: 1,800, A value: 6.5% by weight, B value: 3.3% by weight, melt viscosity: 420 mPa·s). The results are set forth in Table 3. When the resulting inflation film was compared with the inflation film of polyethylene alone in Comparative Example 4A, moldability in molding was improved, but the haze was increased and the gloss was decreased. Thus, optical properties inherent in polyethylene were lowered, and also the mechanical properties tended to be lowered.

Table 3 (results of inflation molding)

| Example/Comparative Example No. | | Ex. 8A | Ex. 9A | Ex. 10A | Ex. 11A | Ex. 12A | Ex. 13A | Ex. 14A | Comp. Ex. 4A | Comp. Ex. 5A | Comp. Ex. 6A |
|---|---|---|---|---|---|---|---|---|---|---|---|
| Polyethylene | Type | F9673P | F9673P | F9673P | F9673P | F9673P | F9673P | F9673E | F9673P | F9673P | F9673P |
| | Amount | 100 | 100 | 100 | 100 | 100 | 100 | 100 | 100 | 100 | 100 |
| Polyethylene wax | Type | 30200BT | 48070BT | 40800T | polyethylene wax (1) | polyethylene wax (2) | 30200BT | 30200BT | | 420P | A-C6 |
| | Amount | 2 | 2 | 2 | 2 | 2 | 1 | 5 | | 2 | 2 |
| Torque | A | 115 | 116 | 125 | 113 | 114 | 119 | 108 | 130 | 117 | 120 |
| Tensile breaking stress | MPa | 24.2 | 24.5 | 23.3 | 24.3 | 24 | 24.7 | 23.2 | 24.7 | 20.5 | 23.8 |
| Haze | % | 12.4 | 13.4 | 12.3 | 12.9 | 12.6 | 13.2 | 12.5 | 13.9 | 13.2 | 17.4 |
| Gloss | % | 70 | 67 | 70 | 71 | 68 | 67 | 72 | 66 | 69 | 58 |

Example of polyethylene (2)

Example 1B

100 Parts by mass of a high-density polyethylene resin (Hizex 7000F, available from Prime Polymer Co., Ltd., density: 952 kg/$m^3$, MI: 0.04 g/10 min) and 2 parts by mass of a metallocene-based polyethylene wax (Excellex 40800T, available from Mitsui Chemicals, Inc., density: 980 kg/$m^3$, Mn: 2,400, A value: 7.3% by weight, B value: 4.2% by weight, melt viscosity: 600 mPa·s) were mixed. Then, a cylinder temperature and a die temperature of a single screw extruder of 50 mm diameter (manufactured by Sumitomo Heavy Industries Modern, Ltd.) equipped with an inflation molding die (100 mm in diameter) were each set at 210°C, and the resulting mixture was fed to the molding machine and melt kneaded at a rotational speed of 57 rpm and a discharge rate of 48 kg/hr to prepare an inflation film. The resulting film had a thickness of 26 μm and a width of 490 mm. The load electric power (torque) in the melt kneading was 42 A, the discharge was stable, the resulting film was free from uneven thickness, and the productivity was excellent. The resulting molded product had a tensile breaking stress of 62.4 MPa and a haze of 68.3%. The results are set forth in Table 4.

Example 2B

Inflation molding was carried out in the same manner as in Example 1B, except that the polyethylene wax was changed to a metallocene-based polyethylene wax (Excellex 30200BT, available from Mitsui Chemicals, Inc., density: 913 kg/$m^3$, Mn: 2,000, A value: 9.3% by weight, B value: 2.2% by weight, melt viscosity: 300 mPa·s). The results are set forth in Table 4.

Example 3B

Inflation molding was carried out in the same manner as in Example 1B, except that the polyethylene wax was changed to the polyethylene wax (1) (density: 897 kg/$m^3$, Mn: 800, A value: 23.5% by weight, B value: 0.01% by weight, melt viscosity: 40 mPa·s). The results are set forth in Table 4.

Example 4B

Inflation molding was carried out in the same manner as in Example 1B, except that the polyethylene wax was changed to the polyethylene wax (2) (density: 948 kg/$m^3$, Mn: 1,300, A value: 19.8% by weight, B value: 0.3% by weight, melt viscosity: 90 mPa·s). The results are set forth in Table 4.

Example 5B

Inflation molding was carried out in the same manner as in Example 1B, except that the polyethylene wax was changed to a metallocene-based polyethylene wax (Excellex 10500, available from Mitsui Chemicals, Inc., density: 960 kg/$m^3$, Mn: 700, A value: 47.8% by weight, B value: 0% by weight, melt viscosity: 18 mPa·s). The results are set forth in Table 4.

Example 6B

Inflation molding was carried out in the same manner as in Example 1B, except that the amount of the metallocene-based polyethylene wax (Excellex 40800T, available from Mitsui Chemicals, Inc.) added was changed to 0.5 part by mass. The results are set forth in Table 4.

Example 7B

Inflation molding was carried out in the same manner as in Example 1B, except that the amount of the metallocene-based polyethylene wax (Excellex 40800T, available from Mitsui Chemicals, Inc.) added was changed to 1 part by mass. The results are set forth in Table 4.

Example 8B

Inflation molding was carried out in the same manner as in Example 1B, except that the amount of the metallocene-based polyethylene wax (Excellex 40800T, available from Mitsui Chemicals, Inc.) added was changed to 5 parts by mass. The results are set forth in Table 4.

Comparative Example 1B

A cylinder temperature and a die temperature of a single screw extruder of 50 mm diameter (manufactured by Sumitomo Heavy Industries Modern, Ltd.) equipped with an inflation molding die (100 mm in diameter) were each set at 210°C, and a high-density polyethylene resin (Hizex 7000F, available from Prime Polymer Co., Ltd., density: 952 $kg/m^3$, MI: 0.04 g/10 min) was fed to the molding machine and melt kneaded at a rotational speed of 57 rpm and a discharge rate of 48 kg/hr to prepare an inflation film. The resulting film had a thickness of 26 μm and a width of 490 mm. The load electric power (torque) in the melt kneading was 51 A. The resulting film had a tensile breaking stress of 65.5 MPa and a haze of 70.7%. The results are set forth in Table 4.

Comparative Example 2B

Inflation molding was carried out in the same manner as in Example 1B, except that the polyethylene wax was changed to a polyethylene wax (Hiwax 420P, available from Mitsui Chemicals, Inc., density: 930 $kg/m^3$, Mn: 2,000, A value: 8.3, B value: 6.2, melt viscosity: 700 mPa·s). The results are set forth in Table 4. When the resulting inflation film was compared with the inflation film of polyethylene alone in Comparative Example 1B, moldability in molding was improved, but the tensile breaking stress was markedly lowered.

Comparative Example 3B

Inflation molding was carried out in the same manner as in Example 1B, except that the polyethylene wax was changed to a polyethylene wax (A-C6, available from Honeywell Co., density: 913 $kg/m^3$, Mn: 1,800, A value: 6.5, B value: 3.3, melt viscosity: 420 mPa·s). The results are set forth in Table 4. When the resulting inflation film was compared with the inflation film of polyethylene alone in Comparative Example 1B, moldability in molding was improved, but the tensile breaking stress was markedly lowered.

Table 4 (results of inflation molding)

| Example/Comparative Example No. | | Ex. 1B | Ex. 2B | Ex. 3B | Ex. 4B | Ex. 5B | Ex. 6B | Ex. 7B | Ex. 8B | Comp. Ex. 1B | Comp. Ex. 2B | Comp. Ex. 3B |
|---|---|---|---|---|---|---|---|---|---|---|---|---|
| Polyethylene | Type | 7000F | 7000F | 7000F | 7000F | 7000F | 7000F | 7000F | 7000F | 7000F | 7000F | 7000F |
| | Amount | 100 | 100 | 100 | 100 | 100 | 100 | 100 | 100 | 100 | 100 | 100 |
| Polyethylene wax | Type | 40800T | 30200BT | polyethylene wax (1) | polyethylene wax (2) | 10500 | 40800T | 40800T | 40800T | | 420P | A-C6 |
| | Amount | 2 | 2 | 2 | 2 | 2 | 0.5 | 1 | 5 | | 2 | 2 |
| Torque | A | 42.0 | 43.5 | 45.5 | 45.5 | 45.0 | 45.0 | 43.5 | 40.5 | 51.0 | 47.5 | 46.0 |
| Tensile breaking stress | MPa | 62.4 | 68.4 | 67.5 | 65.2 | 63.6 | 66.7 | 64.1 | 61.7 | 65.5 | 55.4 | 56.7 |
| Haze | % | 68.3 | 68.7 | 68.8 | 69.2 | 68.4 | 69.2 | 70.8 | 69.1 | 70.7 | 70.5 | 70.2 |

## Claims

1. A process for producing a molded product by inflation molding, comprising inflation-molding a mixture comprising polyethylene having a density, as measured in accordance with a density gradient tube method of JIS K7112, of 900 to 980 (kg/$m^3$) and a polyethylene wax having a density, as measured in accordance with a density gradient tube method of JIS K7112, of 890 to 980 (kg/$m^3$) and a number-average molecular weight (Mn), as measured by gel permeation chromatography (GPC), of 500 to 4,000 in terms of polyethylene and satisfying a relationship represented by the following formula (I):

$$B \leq 0.0075 \times K \qquad (I)$$

wherein B is a content (% by weight) of a component having a molecular weight, as measured by gel permeation chromatography, of not less than 20,000 in terms of polyethylene, in the polyethylene wax, and K is a melt viscosity (mPa·s) of the polyethylene wax at 140°C.

2. The process for producing a molded product by inflation molding as claimed in claim 1, wherein the polyethylene wax further satisfies a relationship represented by the following formula (II):

$$A \leq 230 \times K^{(-0.537)} \qquad (II)$$

wherein A is a content (% by weight) of a component having a molecular weight (Mn), as measured by gel permeation chromatography, of not more than 1,000 in terms of polyethylene, in the polyethylene wax, and K is a melt viscosity (mPa·s) of the polyethylene wax at 140°C.

3. The process for producing a molded product by inflation molding as claimed in claim 1 or 2, wherein the polyethylene has a density, as measured in accordance with a density gradient tube method of JIS K7112, of not less than 900 (kg/$m^3$) and less than 940 (kg/$m^3$) and a number-average molecular weight (Mn), as measured by gel permeation chromatography (GPC), of not less than 10,000 in terms of polyethylene.

4. The process for producing a molded product by inflation molding as claimed in claim 1 or 2, wherein the polyethylene has a density, as measured in accordance with a density gradient tube method of JIS K7112, of 940 to 980 (kg/$m^3$) and MI, as measured under the conditions of 190°C and a test load of 21.18 N in accordance with JIS K7210, of 0.01 to 100 g/10 min, and the polyethylene wax has a number-average molecular weight (Mn), as measured by gel permeation chromatography (GPC), of 500 to 3,000 in terms of polyethylene.

5. The process for producing a molded product by inflation molding as claimed in claim 1 or 2, wherein the polyethylene wax is used in an amount of 0.01 to 10 parts by weight based on 100 parts by weight of the polyethylene.

## Patentansprüche

1. Verfahren zur Herstellung eines geformten Erzeugnisses durch Aufblasformen, umfassend Aufblasformen einer Mischung, umfassend Polyethylen mit einer Dichte, gemessen gemäß einem Dichtegradient-Rohrverfahren nach JIS K7112, von 900 bis 980 (kg/$m^3$) und ein Polyethylenwachs mit einer Dichte, gemessen gemäß einem Dichtegradient-Rohrverfahren nach JIS K7112, von 890 bis 980 (kg/$m^3$) und einem zahlengemittelten Molekulargewicht (Mn), gemessen durch Gelpermeationschromatografie (GPC), von 500 bis 4.000 in Bezug auf Polyethylen, das die durch die folgende Formel (I) dargestellte Beziehung erfüllt:

$$B \leq 0{,}0075 \times K \qquad (I)$$

worin B ein Gehalt (in Gew.%) einer Komponente mit einem Molekulargewicht, gemessen durch Gelpermeationschromatografie, von nicht weniger als 20.000 in Bezug auf Polyethylen im Polyethylenwachs ist, und K die Schmelzviskosität (mPa·s) des Polyethylenwachses bei 140°C ist.

2. Verfahren zur Herstellung eines geformten Erzeugnisses durch Aufblasformen gemäß Anspruch 1, worin das Polyethylenwachs weiterhin die durch die folgende Formel (II) dargestellte Beziehung erfüllt:

$$A \leq 230 \times K^{(-0,537)} \qquad (II)$$

worin A ein Gehalt (in Gew.%) einer Komponente mit einem Molekulargewicht (Mn), gemessen durch Gelpermeationschromatografie, von nicht mehr als 1.000 in Bezug auf Polyethylen im Polyethylenwachs ist, und K die Schmelzviskosität (mPa·s) des Polyethylenwachses bei 140°C ist.

3. Verfahren zur Herstellung eines geformten Erzeugnisses durch Aufblasformen gemäß Anspruch 1 oder 2, worin das Polyethylen eine Dichte, gemessen gemäß eines Dichtegradient-Rohrverfahrens nach JIS K7112, von nicht weniger als 900 (kg/m$^3$) und weniger als 940 (kg/m$^3$) und ein zahlengemitteltes Molekulargewicht (Mn), gemessen durch Gelpermeationschromatografie (GPC), von nicht weniger als 10.000 in Bezug auf Polyethylen hat.

4. Verfahren zur Herstellung eines geformten Erzeugnisses durch Aufblasformen gemäß Anspruch 1 oder 2, worin das Polyethylen eine Dichte, gemessen gemäß einem Dichtegradient-Rohrverfahrens nach JIS K7112, von 940 bis 980 (kg/m$^3$) und ein MI, gemessen unter Bedingungen von 190°C und einer Testlast von 21,18 N gemäß JIS K7210, von 0,01 bis 100 g/10 min hat, und das Polyethylenwachs ein zahlengemitteltes Molekulargewicht (Mn), gemessen durch Gelpermeationschromatografie (GPC), von 500 bis 3.000 in Bezug auf Polyethylen hat.

5. Verfahren zur Herstellung eines geformten Erzeugnisses durch Aufblasformen gemäß Anspruch 1 oder 2, worin das Polyethylenwachs in einer Menge von 0,01 bis 10 Gew.-Teilen auf Basis von 100 Gew.-Teilen des Polyethylens verwendet wird.

## Revendications

1. Processus pour produire un produit moulé par moulage par soufflage, comprenant un moulage par soufflage d'un mélange comprenant du polyéthylène ayant une densité, telle que mesurée par un procédé à tube de gradient de densité de JIS K7112, de 900 à 980 (kg/m$^3$) et une cire de polyéthylène ayant une densité, telle que mesurée par un procédé à tube de gradient de densité de JIS K7112, de 890 à 980 (kg/m$^3$) et une masse moléculaire moyenne en nombre (Mn), telle que mesurée par chromatographie par perméation de gel (GPC), de 500 à 4 000 en termes de polyéthylène et satisfaisant à une relation représentée par la formule suivante (I) :

$$B \leq 0,0075 \times K \qquad (I)$$

dans laquelle B est une teneur (% en poids) d'un composant ayant une masse moléculaire, telle que mesurée par chromatographie par perméation de gel, non inférieure à 20 000 en termes de polyéthylène dans la cire de polyéthylène, et K est une viscosité à l'état fondu (mPa·s) de la cire de polyéthylène à 140 °C.

2. Processus pour produire un produit moulé par moulage par soufflage selon la revendication 1, dans lequel la cire de polyéthylène satisfait en outre à une relation représentée par la formule suivante (II) :

$$A \leq 230 \times K^{(-0.537)} \qquad (II)$$

dans laquelle A est une teneur (% en le poids) d'un composant ayant une masse moléculaire (Mn), telle que mesurée par chromatographie par perméation de gel, non inférieure à 1 000 en termes de polyéthylène, dans la cire de polyéthylène, et K est une viscosité à l'état fondu (mPa·s) de la cire de polyéthylène à 140 °C.

3. Processus pour produire un produit moulé par moulage par soufflage selon la revendication 1 ou 2,

dans lequel le polyéthylène a une densité, telle que mesurée par un procédé à tube de gradient de densité de JIS K7112, non inférieure à 900 (kg/$m^3$) et inférieure à 940 (kg/$m^3$) et une masse moléculaire moyenne en nombre (Mn), telle que mesurée par chromatographie par perméation de gel (GPC), non inférieure à 10 000 en termes de polyéthylène.

**4.** Processus pour produire un produit moulé par moulage par soufflage selon la revendication 1 ou 2, dans lequel le polyéthylène a une densité, telle que mesurée selon un procédé à tube de gradient de densité de JIS K7112, de 940 à 980 (kg/$m^3$) et un MI, telle que mesuré sous les conditions de 190 °C et d'une charge de test de 21,18 N selon JIS K7210, de 0,01 à 100 g/10 min, et la cire de polyéthylène a une masse moléculaire moyenne en nombre (Mn), telle que mesurée par chromatographie par perméation de gel (GPC), de 500 à 3 000 en termes de polyéthylène.

**5.** Processus pour produire un produit moulé par moulage par soufflage selon la revendication 1 ou 2, dans lequel la cire de polyéthylène est utilisée en une quantité de 0,01 à 10 parties en poids sur la base de 100 parties en poids du polyéthylène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5080492 A
- JP 2003528948 A
- JP 4268307 A
- JP 2004175707 A
- WO 2001027124 A
- WO 2004029062 A
- WO 2004083265 A
- JP 2078687 A
- JP 2167305 A
- JP 2024701 A
- JP 3103407 A
- US 4960878 A
- US 5041584 A
- JP 1501950 A
- JP 1502036 A
- JP 3179005 A
- JP 3179006 A
- JP 3207703 A
- JP 3207704 A
- US 5321106 A
- JP 2004051676 A